# EUROPEAN PATENT APPLICATION

(11) **EP 3 896 108 A1**
(43) Date of publication of application: **20.10.2021**
(21) Application number: 19894780.6
(22) Date of filing: 05.12.2019
(51) Int. Cl.: C08G 18/08, B32B 9/00, B32B 27/40, C08G 18/00, C08G 18/32, C08G 18/74

(54) **POLYURETHANE DISPERSION AND LAYERED PRODUCT**

(30) Priority: 11.12.2018 JP 2018231559
(71) Applicant: Mitsui Chemicals, Inc., Minato-ku Tokyo 105-7122 (JP)
(72) Inventor: MIYANAGA, Tomoharu, Sodegaura-shi, Chiba 299-0265 (JP); FUKUDA, Kazuyuki, Sodegaura-shi, Chiba 299-0265 (JP)
(74) Representative: Hoffmann Eitle
(86) International application number: PCT/JP2019/047568
(87) International publication number: WO 2020/121932

(57) **Abstract**

For a polyurethane dispersion in which polyurethane resin is dispersed in water, the polyurethane resin is a reaction product of a reaction of at least a polyisocyanate component with an active hydrogen group-containing component. The polyisocyanate component contains a polyisocyanate compound containing a carbocyclic ring and at least an isocyanate group directly bonding to the carbocyclic ring at a ratio of 90 mass% or more relative to a total amount of the polyisocyanate component. The active hydrogen group-containing component contains diol having 2 to 4 carbon atoms and an active hydrogen group-containing compound containing a hydrophilic group.

## Description

### TECHNICAL FIELD

The present invention relates to a polyurethane dispersion and a laminate.

### BACKGROUND ART

Conventionally, films made of a polyvinylidene chloride or vinylidene chloride copolymer (hereinafter abbreviated as PVDC) are known as a film with excellent oxygen gas barrier properties. However, PVDC emits toxic gas in combustion.

In light of the foregoing, films made of polyvinyl alcohol and an ethylene-vinyl alcohol copolymer are known. However, these films sometimes do not have sufficient gas barrier properties.

Thus, as a film with excellent gas barrier properties, a laminate including a substrate such as a resin film and a polyurethane layer formed by applying and drying polyurethane dispersion on the substrate has been proposed.

The proposed polyurethane dispersion is, for example, a polyurethane dispersion in which polyurethane resin produced by a reaction of an isocyanate group-terminated prepolymer with a chain extender is dispersed in water. More specifically, for the proposed polyurethane dispersion, the isocyanate group-terminated prepolymer is produced by at least allowing a polyisocyanate component containing xylylene diisocyanate and/or hydrogenated xylylene diisocyanate to react with a polyol component containing diol having 2 to 6 carbon atoms, a low-molecular-weight polyol having a functionality of three or more, and an active hydrogen group-containing compound containing a hydrophilic group. A chain extender contains an alkoxysilyl compound having a primary amino group, or a primary amino group and a secondary amino group. The molar ratio of the hydroxyl group in the low-molecular-weight polyol having a functionality of three or more is less than 25% relative to the total mol 100% of the hydroxyl group in the polyol component. Meanwhile, in the proposal, a vapor deposition film in which metal oxide is vapor deposited on a plastic film is used as the substrate of the laminate and a polyurethane layer is laminated on the metal vapor deposition film (for example, see Patent Document 1).

### Citation List

### Patent Document

Patent Document 1: Japanese Unexamined Patent Publication No. 2017-222863

### SUMMARY OF THE INVENTION

### PROBLEM TO BE SOLVED BY THE INVENTION

On the other hand, depending on the application, such a laminate is required to maintain excellent gas barrier properties even after high-temperature sterilization treatment (retort treatment).

However, when the polyurethane layer of Patent Document 1 is laminated on the metal vapor deposition film and the formed laminate is subjected to high-temperature sterilization treatment (retort treatment), the polyurethane layer is deformed and deteriorated (whitened or expanded) and the deformation may damage the metal vapor deposition film. As a result, the laminate does not have sufficient gas barrier properties after high-temperature sterilization treatment (retort treatment).

The present invention provides a polyurethane dispersion with which a laminate having excellent gas barrier properties even after high-temperature sterilization treatment (retort treatment) is produced, and a laminate produced with the polyurethane dispersion.

### MEANS FOR SOLVING THE PROBLEM

The present invention [1] includes a polyurethane dispersion in which polyurethane resin is dispersed in water, wherein the polyurethane resin is a reaction product of a reaction of at least a polyisocyanate component with an active hydrogen group-containing component, the polyisocyanate component contains a polyisocyanate compound containing a carbocyclic ring and at least an isocyanate group directly bonding to the carbocyclic ring at a ratio of 90 mass% or more relative to a total amount of the polyisocyanate component, and the active hydrogen group-containing component contains diol having 2 to 4 carbon atoms and an active hydrogen group-containing compound containing a hydrophilic group.

The present invention [2] includes the polyurethane dispersion described in [1] above, wherein the polyisocyanate compound contains isophoron diisocyanate

The present invention [3] includes the polyurethane dispersion described in [1] or [2] above further containing a cross-linking agent.

The present invention [4] includes a laminate comprising: a first polyurethane layer including a dried product of the polyurethane dispersion described in any one of [1] to [3] above; and an inorganic layer in contact with at least a surface of the first polyurethane layer.

The present invention [5] includes the laminate described in [4] above, wherein the inorganic layer contains aluminum oxide and/or silicon oxide.

The present invention [6] includes the laminate described in [4] or [5] above further comprising a second polyurethane layer on the other surface of the first polyurethane layer opposite to the surface with which the inorganic layer is in contact, the second polyurethane layer including a dried product of a second polyurethane dispersion containing second polyurethane resin, wherein the second polyurethane resin is a reaction product of a reaction of at least a second polyisocyanate component containing xylylene diisocyanate and/or hydrogenated xylylene diisocyanate with a second active hydrogen group-containing component containing diol having 2 to 4 carbon atoms and an active hydrogen group-containing compound containing a hydrophilic group.

### EFFECTS OF THE INVENTION

In the polyurethane dispersion of the present invention, the active hydrogen group-containing component contains diol having 2 to 4 carbon atoms, and an active hydrogen group-containing compound containing a hydrophilic group.

By using the polyurethane dispersion with the active hydrogen group-containing component, a polyurethane layer with excellent gas barrier properties is produced.

Further, in the polyurethane dispersion of the present invention, the polyisocyanate component contains a polyisocyanate compound having a carbocyclic ring and an isocyanate group directly bonding to the carbocyclic ring at a rate of 90 mass% or more relative to the total amount of the polyisocyanate component.

In the polyurethane dispersion, the isocyanate group directly bonds to the carbocyclic ring in the polyisocyanate component. This limits the degree of freedom of the isocyanate group and the degree of freedom of the urethane bond in the polyurethane resin.

As a result, the deformation and deterioration of the polyurethane layer due to high-temperature sterilization treatment (retort treatment) is suppressed. Thus, the damage to the inorganic layer is suppressed when the polyurethane layer is laminated on the inorganic layer.

Then, because a dried product of the polyurethane dispersion is laminated on the inorganic layer, the deformation and deterioration of the polyurethane layer due to high-temperature sterilization treatment (retort treatment) is suppressed, and thus the laminate of the present invention has excellent gas barrier properties even after the high-temperature sterilization treatment (retort treatment).

### BRIEF DESCRIPTION OF THE DRAWINGS

[FIG. 1] FIG. 1 is a schematic diagram illustrating an embodiment of the laminate of the present invention.
[FIG. 2] FIG. 2 is a schematic diagram illustrating another embodiment of the laminate of the present invention.

### DESCRIPTION OF THE EMBODIMENTS

The polyurethane dispersion of the present invention is produced by dispersing polyurethane resin (aqueous polyurethane resin) in water.

The polyurethane resin is a reaction product of a reaction of at least the polyisocyanate component with the active hydrogen group-containing component.

The polyisocyanate component contains the polyisocyanate compound as the main component (for example, at a rate of 90 mass% or more, preferably 95 mass% or more relative to the total amount of the polyisocyanate component).

Preferably, the polyisocyanate component consists of the polyisocyanate compound.

The polyisocyanate compound is an organic compound having two or more isocyanate groups.

As the polyisocyanate compound, preferably, an organic compound (diisocyanate compound) having two isocyanate groups is used.

The polyisocyanate compound contains, as an essential component, a polyisocyanate compound having a carbocyclic ring and at least an isocyanate (-NCO) group directly bonding to the carbocyclic ring (hereinafter, referred to as a "carbocyclic ring-directly-bonding NCO compound").

That is, the polyisocyanate component contains a polyisocyanate compound. The polyisocyanate compound contains, as an essential component, a carbocyclic ring-directly-bonding NCO compound.

In other words, the polyisocyanate component contains a carbocyclic ring-directly-bonding NCO compound.

The carbocyclic ring-directly-bonding NCO compound is an organic compound having a carbocyclic ring and two or more isocyanate groups. Further, in the carbocyclic ring-directly-bonding NCO compound, at least one of the two or more isocyanate groups directly bonds to the carbocyclic ring.

A preferable carbocyclic ring-directly-bonding NCO compound is a diisocyanate compound which has a carbocyclic ring and two isocyanate groups and in which at least one of the two isocyanate groups directly bonds to the carbocyclic ring.

In the carbocyclic ring-directly-bonding NCO compound, the carbocyclic ring is a cyclic hydrocarbon group. Examples of the carbocyclic ring include an aromatic ring, an aliphatic ring, and an unsaturated carbocyclic ring.

Examples of the carbocyclic ring more specifically include aromatic rings such as a benzene ring, aliphatic rings such as a cyclopentane ring and a cyclohexane ring, and unsaturated carbocyclic rings such as a cyclohexene ring.

A single (one) or a plurality (two or more) of the carbocyclic ring(s) can be contained in a molecule of the carbocyclic ring-directly-bonding NCO compound.

When a plurality of the carbocyclic rings is contained in a molecule of the carbocyclic ring-directly-bonding NCO compound, the carbocyclic rings can be polycyclic carbocyclic rings that are condensed so that a plurality of carbocyclic rings has a common ring or can be a plurality of carbocyclic rings which has a cross-linking ring between arbitrary carbons. More specifically, examples of the carbocyclic rings include aromatic polycyclic carbocyclic ring such as naphthalene rings, and a plurality of alicyclic carbocyclic rings such as norbornene rings.

Preferably, a single (one) carbocyclic ring is contained in a molecule of the carbocyclic ring-directly-bonding NCO compound.

For the carbocyclic ring-directly-bonding NCO compound, the isocyanate group directly bonding to the carbocyclic ring means a nitrogen atom of the isocyanate (-NCO) group singly bonding to a carbon atom of the carbocyclic ring.

When the carbocyclic ring-directly-bonding NCO compound contains two or more carbocyclic rings, at least one of the isocyanate groups may directly bond to at least one of the carbocyclic rings.

That is, the carbocyclic ring-directly-bonding NCO compound may contain a carbocyclic ring directly bonded by at least an isocyanate group. The carbocyclic ring-directly-bonding NCO compound can contain a carbocyclic ring bonded by no isocyanate group, or a carbocyclic ring indirectly bonded by an isocyanate group (for example, through an alkylene group or an arylene group). Alternatively, the carbocyclic ring-directly-bonding NCO compound can contain an isocyanate group that does not directly bond to a carbocyclic ring.

Examples of the carbocyclic ring-directly-bonding NCO compound more specifically include carbocyclic ring-directly-bonding NCO compound monomers such as aromatic polyisocyanate containing an aromatic ring directly bonded by an isocyanate group (an aromatic ring-directly-bonding NCO compound) and alicyclic polyisocyanate containing an aliphatic ring directly bonded by an isocyanate group (an aliphatic ring-directly-bonding NCO compound).

Examples of the aromatic polyisocyanate include aromatic diisocyanates such as tolylene diisocyanate (2,4- or 2,6-tolylene diisocyanate or a mixture thereof) (TDI), phenylenediisocyanate (m-, p-phenylenediisocyanate or a mixture thereof), 1,5-naphthalene diisocyanate (NDI), 4,4'-diphenyl diisocyanate, diphenylmethanediisocyanate (4,4'-, 2,4'- or 2,2'-diphenylmethanediisocyanate or a mixture thereof) (MDI), 4,4'-toluidine diisocyanate (TODI), and 4,4'-diphenylether diisocyanate.

Examples of the alicyclic polyisocyanate include alicyclic diisocyanates such as 1,3-cyclopentane diisocyanate, 1,3-cyclopentene diisocyanate, 1,4-cyclohexanediisocyanate, 1,3-cyclohexanediisocyanate, 3-isocyanatomethyl-3,5,5-trimethylcyclohexyl isocyanate (also called: isophoron diisocyanate)(IPDI), methylenebis(cyclohexyl isocyanate)(also called: bis(isocyanatocyclohexyl) methane)(4,4'-, 2,4'- or 2,2'-methylenebis(cyclohexyl isocyanate), their Trans, Trans-isomer, Trans, Cis-isomer, Cis, Cis-isomer, or a mixture thereof) (H₁₂MDI), and methylcyclohexanediisocyanate (methyl-2,4-cyclohexanediisocyanate, methyl-2,6-cyclohexanediisocyanate).

Alternatively, examples of the carbocyclic ring-directly-bonding NCO compound include the derivatives of the above-described monomers (carbocyclic ring-directly-bonding NCO compound monomers).

Examples of the derivatives of the above-described monomers include multimers (e.g., dimer, trimer (e.g., isocyanurate-modified product, iminooxadiazinedione-modified product), pentamer, heptamer, etc.), allophanate-modified products (e.g., an allophanate-modified product of a reaction of the above-described monomer with a low-molecular-weight polyol to be described later, etc.), polyol modified products (e.g., a polyol modified product (alcohol adduct) of a reaction of the above-described monomer with a low-molecular-weight polyol to be described later, etc.), biuret-modified products (e.g., a biuret-modified product of a reaction of the above-described monomer with water or amines, etc.), urea-modified products (e.g., an urea-modified product of a reaction of the above-described monomer with diamine, etc.), oxadiazinetrione-modified products (e.g., oxadiazinetrione of a reaction of the above-described monomer with carbon dioxide, etc.), carbodiimide-modified products (a carbodiimide-modified product of a decarboxylation condensation reaction of the above-described monomer, etc.), urethodione-modified products, and uretonimine-modified products.

The derivatives may be used singly or in combination of two or more.

The carbocyclic ring-directly-bonding NCO compounds may be used singly or in combination of two or more.

For the carbocyclic ring-directly-bonding NCO compound, preferably, aromatic polyisocyanate and alicyclic polyisocyanate are used. More preferably, alicyclic polyisocyanate is used. Further preferably, isophoron diisocyanate (IPDI) is used.

In other words, the carbocyclic ring-directly-bonding NCO compound preferably includes isophoron diisocyanate (IPDI).

Further, the carbocyclic ring-directly-bonding NCO compounds can be classified according to the number of the carbocyclic rings.

More specifically, the carbocyclic ring-directly-bonding NCO compound may be a carbocyclic ring-directly-bonding NCO compound having a carbocyclic ring (hereinafter, referred to as a "single carbocyclic ring-directly-bonding NCO compound"), or a carbocyclic ring-directly-bonding NCO compound having a plurality of carbocyclic rings (hereinafter, referred to as a "plural carbocyclic rings-directly-bonding NCO compound").

Examples of the single carbocyclic ring-directly-bonding NCO compound include a polyisocyanate compound containing a carbocyclic ring to which one of the isocyanate groups directly bonds and to which the other isocyanate group bonds directly and/or indirectly through an alkylene group.

Specifically, examples of the single carbocyclic ring-directly-bonding NCO compound include a polyisocyanate compound containing an aromatic ring to which one of the isocyanate groups directly bonds and to which the other isocyanate group directly bonds. More specifically, the examples thereof include tolylene diisocyanate (TDI) and phenylenediisocyanate.

Another example of the single carbocyclic ring-directly-bonding NCO compound is a polyisocyanate compound containing an aliphatic ring to which one of the isocyanate groups directly bonds and to which the other isocyanate group bonds through an alkylene group. More specifically, the example thereof includes isophoron diisocyanate (IPDI).

The single carbocyclic ring-directly-bonding NCO compounds may be used singly or in combination of two or more.

As the single carbocyclic ring-directly-bonding NCO compound, preferably, tolylene diisocyanate (TDI) or isophoron diisocyanate (IPDI) is used. More preferably, isophoron diisocyanate (IPDI) is used.

Meanwhile, examples of the plural carbocyclic rings-directly-bonding NCO compound include a polyisocyanate compound containing two or more carbocyclic rings. One of the isocyanate groups directly bonds to one of the carbocyclic rings. The other isocyanate group bonds to one of the carbocyclic rings directly and/or indirectly through an alkylene group.

Specifically, examples of the plural carbocyclic rings-directly-bonding NCO compound include a polyisocyanate compound containing two or more aromatic rings. One of the isocyanate groups directly bonds to one of the aromatic rings. The other isocyanate group bonds to one of the aromatic rings directly and/or indirectly through an alkylene group. More specifically, the examples thereof include diphenylmethanediisocyanate (MDI).

Specifically, examples of the plural carbocyclic rings-directly-bonding NCO compound include a polyisocyanate compound containing two or more aliphatic rings. One of the isocyanate directly groups bonds to one of the aliphatic rings. The other isocyanate group bonds to one of the aliphatic rings directly and/or indirectly through an alkylene group. More specifically, the examples include methylenebis(cyclohexyl isocyanate) (H₁₂MDI).

The plural carbocyclic rings-directly-bonding NCO compounds may be used singly or in combination of two or more.

For the plural carbocyclic rings-directly-bonding NCO compound, preferably, diphenylmethanediisocyanate (MDI) and methylenebis(cyclohexyl isocyanate) (H₁₂MDI) are used. More preferably, methylenebis(cyclohexyl isocyanate) (H₁₂MDI) is used.

The carbocyclic ring-directly-bonding NCO compounds may be used singly or in combination of two or more.

As the carbocyclic ring-directly-bonding NCO compound, for improving the heat resistance, preferably, the single carbocyclic ring-directly-bonding NCO compound (preferably TDI or IPDI) and the plural carbocyclic rings-directly-bonding NCO compound (preferably H₁₂MDI) are used in combination.

For example, relative to 100 parts by mass of a total of the single carbocyclic ring-directly-bonding NCO compound (preferably TDI or IPDI) and the plural carbocyclic rings-directly-bonding NCO compound (preferably H₁₂MDI), 50 parts by mass or more, preferably 60 parts by mass or more, more preferably 70 parts by mass or more, further preferably 80 parts by mass or more, and for example, 95 parts by mass or less, preferably 90 parts by mass or less of the single carbocyclic ring-directly-bonding NCO compound (preferably TDI or IPDI) is combined. Meanwhile, 5 parts by mass or more, preferably 10 parts by mass or more, and for example, 50 parts by mass or less, preferably 40 parts by mass or less, more preferably 30 parts by mass or less, further preferably 20 parts by mass or less of the plural carbocyclic rings-directly-bonding NCO compound (preferably H₁₂MDI) is combined.

Alternatively, as necessary, the polyisocyanate component can contain a polyisocyanate compound without an isocyanate group directly bonding to the carbocyclic ring (hereinafter, referred to as a "carbocyclic-ring-non-directly-bonding NCO compound") in addition to the carbocyclic ring-directly-bonding NCO compound.

Examples of the carbocyclic-ring-non-directly-bonding NCO compound include carbocyclic-ring-non-directly-bonding NCO compound monomers such as a chain aliphatic polyisocyanate without a carbocyclic ring (hereinafter, referred to as a "chain NCO compound"), and a carbocyclic ring indirect bonded polyisocyanate that contains a carbocyclic ring and does not contain an isocyanate group directly bonding to the carbocyclic ring (hereinafter, referred to as a "carbocyclic ring-indirectly-bonding NCO compound").

Examples of the chain NCO compound include chain aliphatic diisocyanates such as trimethylenediisocyanate, 1,2-propylenediisocyanate, butylenediisocyanate (tetramethylenediisocyanate, 1,2-butylenediisocyanate, 2,3-butylenediisocyanate, and 1,3-butylenediisocyanate), 1,5-pentamethylenediisocyanate (PDI), 1,6-hexamethylenediisocyanate (also called: hexamethylenediisocyanate)(HDI), 2,4,4- or 2,2,4-trimethylhexamethylenediisocyanate, and 2,6-diisocyanatemethyl caproate.

Examples of carbocyclic ring-indirectly-bonding NCO compound include: araliphatic diisocyanate in which an isocyanate group indirectly bonds to an aromatic ring such as xylylene diisocyanate (1,2-, 1,3- or 1,4-xylylene diisocyanate or a mixture thereof (XDI), tetramethylxylylene diisocyanate (1,3- or 1,4-tetramethylxylylene diisocyanate or a mixture thereof)(TMXDI), and ω,ω'-diisocyanate-1,4-diethylbenzene; and cycloaliphatic aliphatic diisocyanate in which an isocyanate group indirectly bonds to an aliphatic ring such as bis(isocyanatomethyl) cyclohexane (hydrogenated xylylene diisocyanate (1,2-, 1,3-, or 1,4-hydrogenated xylylene diisocyanate or a mixture thereof) (H₆XDI), norbornane diisocyanate (2,5- or 2,6- bis(isocyanatomethyl) bicyclo[2.2.1]heptane or a mixture thereof) (NBDI).

The examples of the carbocyclic-ring-non-directly-bonding NCO compound also include the above-described derivatives.

Examples of the derivatives include multimers, allophanate-modified products, polyol modified products, biuret-modified products, urea-modified products, oxadiazinetrione-modified products, carbodiimide-modified products, urethodione-modified products, and uretonimine-modified products of the carbocyclic-ring-non-directly-bonding NCO compound.

The derivatives may be used singly or in combination of two or more.

The carbocyclic-ring-non-directly-bonding NCO compounds may be used singly or in combination of two or more.

The content of the carbocyclic-ring-non-directly-bonding NCO compound is, relative to a total amount of the carbocyclic ring-directly-bonding NCO compound and the carbocyclic-ring-non-directly-bonding NCO compound (the total amount of the polyisocyanate compound), 10 mass% or less, preferably 5 mass% or less, more preferably 1 mass% or less, further preferably 0 mass%.

Meanwhile, the content of the carbocyclic ring-directly-bonding NCO compound is, relative to a total amount of the carbocyclic ring-directly-bonding NCO compound and the carbocyclic-ring-non-directly-bonding NCO compound (the total amount of the polyisocyanate compound), 90 mass% or more, preferably 95 mass% or more, more preferably 99 mass% or more, further preferably 100 mass%.

In other words, the polyisocyanate compound in the polyisocyanate component consists of a carbocyclic ring-directly-bonding NCO compound.

Meanwhile, the content of the carbocyclic ring-directly-bonding NCO compound is, relative to a total amount of the polyisocyanate component, 90 mass% or more, preferably 95 mass% or more, more preferably 99 mass% or more.

On the other hand, the content of the carbocyclic-ring-non-directly-bonding NCO compound is, relative to a total amount of the polyisocyanate component, 10 mass% or less, preferably 5 mass% or less, more preferably 1 mass% or less.

When the contents of the carbocyclic ring-directly-bonding NCO compound and the carbocyclic-ring-non-directly-bonding NCO compound are in the ranges described above, excellent resistance properties to high-temperature sterilization treatment (retort treatment) and excellent gas barrier properties are provided.

For the active hydrogen group-containing component, a polyol component is used.

The polyol component contains, as essential components, diol having 2 to 4 carbon atoms and an active hydrogen group-containing compound containing a hydrophilic group.

The diol having 2 to 4 carbon atoms is an organic compound having a molecular weight (number average) of 40 or more, and less than 300, preferably less than 400 and having two hydroxyl groups and having 2 to 4 carbon atoms, to be specific, examples thereof include alkanediol having 2 to 4 carbon atoms (alkyleneglycol having 2 to 4 carbon atoms) such as ethylene glycol, propylene glycol, 1,3-propanediol, 1,4-butyleneglycol, 1,3-butyleneglycol, 1,2-butyleneglycol; etherdiol having 2 to 4 carbon atoms such as diethylene glycol; and alkenediol having 2 to 4 carbon atoms such as 1,4-dihydroxy-2-butene.

The diols having 2 to 4 carbon atoms may be used singly or in combination of two or more.

For the gas barrier properties, as the diol having 2 to 4 carbon atoms, preferably alkanediol having 2 to 4 carbon atoms, or more preferably ethylene glycol is used.

The mixing ratio of the diol having 2 to 4 carbon atoms is, relative to 100 parts by mass of a total amount of the polyol component, for example, 20 parts by mass or more, preferably 30 parts by mass or more, and for example, 80 parts by mass or less, preferably 70 parts by mass or less.

The active hydrogen group-containing compound containing the hydrophilic group is a compound containing a hydrophilic group such as a nonionic group or an ionic group and containing two or more active hydrogen groups such as an amino group or a hydroxyl group. Specifically, examples of the active hydrogen group-containing compound containing the hydrophilic group include an active hydrogen group-containing compound containing a nonionic group and an active hydrogen group-containing compound containing an ionic group.

Examples of the active hydrogen group-containing compound containing a nonionic group include polyoxyethylene glycol, one-end-capped polyoxyethylene glycol, and polyols containing a polyoxyethylene side chain.

The polyol containing a polyoxyethylene side chain is an organic compound containing a polyoxyethylene group in the side chain and having two or more hydroxyl groups, and can be synthesized as follows.

That is, first, the above-described diisocyanate and the one-end-capped polyoxyethylene glycol (e.g., alkoxypolyoxyethylenemonol having its one-end-capped with an alkyl group having 1 to 4 carbon atoms, number average molecular weight 200 to 6000, preferably 300 to 3000) are subjected to an urethane-forming reaction at a ratio at which the isocyanate group of diisocyanate is in excess relative to the hydroxyl group of the one-end-capped polyoxyethylene glycol, and as necessary unreacted diisocyanate is removed, thereby producing polyoxyethylene-chain containing monoisocyanate.

Then, the polyoxyethylene chain-containing monoisocyanate and dialkanolamine (e.g., diethanolamine, etc.) are subjected to urea-forming reaction at such a proportion that the isocyanate group of the polyoxyethylene group-containing monoisocyanate is substantially equal to the secondary amino group of dialkanolamine.

In the active hydrogen group-containing compound containing a nonionic group, the nonionic group, to be specific, polyoxyethylene group has a number average molecular weight of, for example, 600 to 6000.

For the diisocyanate for producing polyol containing polyoxyethylene side chain, preferably, aliphatic diisocyanate such as hexamethylenediisocyanate (HDI), and alicyclic diisocyanates such as 1,4- or 1,3-bis(isocyanatomethyl) cyclohexane (H₆XDI), 3-isocyanatomethyl-3,5,5-trimethylcyclohexyl isocyanate (also called: isophoron diisocyanate)(IPDI), 4,4'-methylenebis(cyclohexyl isocyanate)(H₁₂MDI), and 2,6-bis(isocyanatomethyl) norbornane (NBDI) are used.

The active hydrogen group-containing compound containing an ionic group is an organic compound having a combination of an anionic group such as carboxylic acid, or a cationic group such as quaternary amine, and two or more active hydrogen groups such as hydroxyl groups or amino groups. Preferably, an organic compound having a combination of an anionic group and two or more hydroxyl groups is used. More preferably, an organic compound having a combination of carboxylic acid and two hydroxyl groups (active hydrogen group-containing compound containing a carboxy group (e.g., carboxy group-containing polyol, etc.)) is used.

Examples of the carboxy group-containing polyol include polyhydroxy alkanoic acids such as 2,2-dimethylolacetic acid, 2,2-dimethylollactic acid, 2,2-dimethylolpropionic acid (also called: dimethylolpropionic acid), 2,2-dimethylolbutanoic acid, 2,2-dimethylolbutyric acid, and 2,2-dimethylol valeric acid, and preferably 2,2-dimethylolpropionic acid is used.

The active hydrogen group-containing compounds containing a hydrophilic group can be used singly or in combination.

As the active hydrogen group-containing compound containing a hydrophilic group, preferably, an active hydrogen group-containing compound containing an ionic group, more preferably, carboxy group-containing polyol, further preferably, polyhydroxy alkanoic acid, or particular preferably, dihydroxy alkanoic acid is used.

By blending polyhydroxy alkanoic acid, more improvement in the gas barrier properties, adherence to the substrate, and transparency in addition to water dispersibility can be achieved.

The mixing ratio of the active hydrogen group-containing compound containing a hydrophilic group is, relative to 100 parts by mass of a total of the polyol component, for example, 20 parts by mass or more, preferably 30 parts by mass or more, and for example 50 parts by mass or less, preferably 45 parts by mass or less.

The polyol component may contain, in addition, as an optional component, other low-molecular-weight polyol (excluding diol having 2 to 4 carbon atoms and active hydrogen group-containing compound containing a hydrophilic group) and high-molecular-weight polyol.

Examples of the other low-molecular-weight polyols include diol having 5 or more carbon atoms (dihydric alcohol), and low-molecular-weight polyol having a functionality of three or more.

Examples of the diol having 5 or more carbon atoms (dihydric alcohol) include alkanediol having 5 to 20 carbon atoms such as 1,5-pentanediol, 1,6-hexanediol, neopentyl glycol, 3-methyl-1,5-pentanediol, and 1,3- or 1,4-cyclohexanediol; 2,6-dimethyl-1-octene-3,8-diol, 1,3- or 1,4-cyclohexanedimethanol and a mixture thereof, hydrogenated bisphenol A and bisphenol A; and etherdiol having 5 or more carbon atoms such as triethylene glycol and dipropylene glycol.

Examples of the diol having 5 or more carbon atoms (dihydric alcohol) include polyalkylene oxide having a number average molecular weight of 400 or less and a functionality of two. Such polyalkylene oxide can be produced as polyethylene glycol (polyoxyethylene ether glycol), polypropylene glycol (polyoxypropylene ether glycol), and polyethylenepolypropyleneglycol (random or block copolymer), for example, by subjecting alkylene oxide such as ethylene oxide and/or propylene oxide to addition reaction with the above-described dihydric alcohol as an initiator. Examples thereof also include polytetramethylene ether glycol having a number average molecular weight of 400 or less produced by ring-opening polymerization of tetrahydrofuran.

The low-molecular-weight polyol having a functionality of three or more is an organic compound having a number average molecular weight of 40 or more, and less than 300, preferably less than 400 and having three or more hydroxyl groups in one molecular, and examples thereof include trihydric alcohols (low-molecular-weight triol) such as glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol; tetrahydric alcohols such as tetramethylolmethane (pentaerythritol) and diglycerol; pentahydric alcohol such as xylitol; hexahydric alcohols such as sorbitol, mannitol, allitol, iditol, dulcitol, altritol, inositol, and dipentaerythritol; heptahydric alcohol such as perseitol; and octahydric alcohol such as sucrose.

Examples of the low-molecular-weight polyol having a functionality of three or more also include polyalkylene oxide having a number average molecular weight of 40 or more and less than 300, preferably less than 400 and a functionality of three or more. Such polyalkylene oxide can be produced as polyethylenepolyol, polypropylenepolyol, and polyethylenepolypropylenepolyol (random or block copolymer), for example, by subjecting alkylene oxide such as ethylene oxide and/or propylene oxide to addition reaction with the above-described low-molecular-weight polyol having a functionality of three or more or a known polyamine as an initiator.

The low-molecular-weight polyols having a functionality of three or more may be used singly or in combination of two or more.

For the low-molecular-weight polyol having a functionality of three or more, preferably trihydric alcohol (low-molecular-weight triol) and tetrahydric alcohol are used, more preferably trihydric alcohol (low-molecular-weight triol) is used, even more preferably, trimethylolpropane and glycerin are used.

The other low-molecular-weight polyols (the low-molecular-weight polyols excluding the above-described diol having 2 to 4 carbon atoms and the active hydrogen group-containing compound containing a hydrophilic group) may be used singly or in combination of two or more.

For the low-molecular-weight polyol, preferably low-molecular-weight polyol having a functionality of three or more, or more preferably the low-molecular-weight polyol having a functionality of three is used. When the polyol component contains low-molecular-weight polyol having a functionality of three or more (more preferably, having a functionality of three), the polyol component works together with the carbocyclic ring-directly-bonding NCO compound to improve the heat resistance.

When the other low-molecular-weight polyol (the low-molecular-weight polyol excluding the above-described diol having 2 to 4 carbon atoms and the active hydrogen group-containing compound containing a hydrophilic group) is contained, the content of the other low-molecular-weight polyol is, relative to 100 parts by mass of a total of the polyol component, for example, 30 parts by mass or less, preferably 20 parts by mass or less, more preferably 10 parts by mass or less, and for example, 1 part by mass or more.

Further, when the low-molecular-weight polyol having a functionality of three or more is used as the other low-molecular-weight polyol, 1 part by mass or more, preferably 5 parts by mass or more, and for example, 20 parts by mass or less, preferably 10 parts by mass or less of the low-molecular-weight polyol having a functionality of three or more is combined with the diol having 2 to 4 carbon atoms, relative to 100 parts by mass of a total of the diol having 2 to 4 carbon atoms and trihydric alcohol.

The high-molecular-weight polyol is a compound having two or more hydroxyl groups and a number average molecular weight (number average molecular weight determined by GPC measurement using standard polystyrene as the calibration curve) of, for example, 300 or more, preferably 400 or more. Examples thereof include polyether polyols (such as polyoxyalkylene polyol, and polytetramethylene ether polyol), polyester polyols (such as adipic acid polyester polyol, phthalic acid polyester polyol, and lactone polyester polyol), polycarbonate poyols, polyurethane polyols (polyols produced by urethane modifying, for example, polyether polyol, polyester polyol, or polycarbonate polyol with polyisocyanate), epoxy polyols, vegetable oil polyols, polyolefin polyols, acryl polyols, and vinyl monomer modified polyols.

The high-molecular-weight polyols may be used singly or in combination of two or more.

When the high-molecular-weight polyol is excessively contained in the active hydrogen group-containing component, the gas barrier properties decrease. Thus, for suppressing the decrease in the gas barrier properties, the content of the high-molecular-weight polyol in the active hydrogen group-containing component is limited to a predetermined value or less.

More specifically, the content of the high-molecular-weight polyol (namely, a high-molecular-weight polyol having a number average molecular weight of 300 or more) is, relative to a total amount of the active hydrogen group-containing component, 40 mass% or less, preferably30 mass% or less, more preferably 20 mass% or less, further preferably 10 mass% or less, further preferably 5 mass% or less, or particularly preferably 2 mass% or less.

Particularly, when the high-molecular-weight polyol having a number average molecular weight of 1000 or more is excessively contained in the active hydrogen group-containing component, the gas barrier properties notably decrease. Thus, for suppressing the decrease in the gas barrier properties, the content of the high-molecular-weight polyol in the active hydrogen group-containing component is limited to a predetermined value or less.

More specifically, the content of the high-molecular-weight polyol having a number average molecular weight of 1000 or more is, relative to a total amount of the active hydrogen group-containing component, 40 mass% or less, preferably 30 mass% or less, more preferably 20 mass% or less, further preferably 10 mass% or less, further preferably 5 mass% or less, particularly preferably 2 mass% or less.

In other words, the active hydrogen group-containing component is allowed to contain the high-molecular-weight polyol at the above-described ratio.

For the gas barrier properties, the active hydrogen group-containing component (the polyol component) preferably contains no high-molecular-weight polyol.

The polyol component more preferably consists of the above-described diol having 2 to 4 carbon atoms, the active hydrogen group-containing compound containing a hydrophilic group, and the low-molecular-weight polyol having a functionality of three or more. Alternatively, the polyol component more preferably consists of the diol having 2 to 4 carbon atoms and the active hydrogen group-containing compound containing a hydrophilic group.

Alternatively, the active hydrogen group-containing component can further contain an amino group-containing component in addition to the polyol component.

Examples of the amino group-containing component include amino group-containing compounds such as aromatic polyamines, araliphatic polyamines, alicyclic polyamines, aliphatic polyamines, amino alcohols, and polyoxyethylene group-containing polyamines, alkoxysilyl compounds having a primary amino group or a primary amino group and a secondary amino group (hereinafter, sometimes referred to as an "amino group-containing alkoxysilyl compound"), and hydrazines or its derivatives.

Examples of the aromatic polyamines include 4,4'-diphenylmethanediamine and tolylenediamine.

Examples of the araliphatic polyamine include 1,3- or 1,4-xylylene diamine, or mixtures thereof.

Examples of the alicyclic polyamine include 3-aminomethyl-3,5,5-trimethyl cyclohexylamine (also known as isophoronediamine), 4,4'-dicyclohexylmethanediamine, 2,5(2,6)-bis(aminomethyl) bicyclo[2.2.1]heptane, 1,4-cyclohexanediamine, 1-amino-3-aminomethyl-3,5,5-trimethylcyclohexane, bis-(4-aminocyclohexyl) methane, diaminocyclohexane, 3,9-bis(3-aminopropyl)-2,4,8,10-tetraoxaspiro[5,5]undecane, 1,3- and 1,4-bis(aminomethyl) cyclohexane, and mixtures thereof.

Examples of the aliphatic polyamine include ethylenediamine, propylene diamine, 1,3-propane diamine, 1,4-butanediamine, 1,5-pentanediamine, 1,6-hexamethylenediamine, diethylenetriamine, triethylenetetramine, tetraethylenepentamine, 1,2-diaminoethane, 1,2-diaminopropane, and 1,3-diaminopentane.

Examples of the amino alcohol include 2-((2-aminoethyl) amino) ethanol (also called: N-(2-aminoethyl) ethanolamine), and 2-((2-aminoethyl) amino)-1-methylpropanol (also called: N-(2-aminoethyl) isopropanolamine).

Examples of the polyoxyethylene group-containing polyamine include polyoxyalkylene etherdiamine such as polyoxyethylene etherdiamine. To be more specific, examples thereof include PEG#1000 diamine manufactured by NOF Corporation, Jeffamine ED-2003, EDR-148, and XTJ-512 manufactured by Huntsman Inc.

Examples of the alkoxysilyl compound having a primary amino group, or a primary amino group and a secondary amino group (amino group-containing alkoxysilyl compound) include an alkoxysilyl compound having a primary amino group such as γ-aminopropyltrimethoxysilane, γ-aminopropyltriethoxysilane, and N-phenyl-γ-aminopropyltrimethoxysilane; and an alkoxysilyl compound having a primary amino group and a secondary amino group such as N-β (aminoethyl) γ-aminopropyltrimethoxysilane (also called: N-2-(aminoethyl)-3-aminopropyltrimethoxysilane), N-β (aminoethyl) γ-aminopropyltriethoxysilane (also called: N-2-(aminoethyl)-3-aminopropyltriethoxysilane), N-β (aminoethyl) γ-aminopropylmethyldimethoxysilane (also called: N-2-(aminoethyl)-3-aminopropylmethyldimethoxysilane), and N-β (aminoethyl) γ-aminopropylmethyldiethoxysilane (also called: N-2-(aminoethyl)-3-aminopropylmethyldiethoxysilane).

Examples of the hydrazines or its derivatives include hydrazine (including hydrate), succinic acid dihydrazide, and adipic acid dihydrazide.

The amino group-containing components may be used singly or in combination of two or more.

For the amino group-containing component, preferably amino alcohols, or amino group-containing alkoxysilyl compounds are used. More preferably 2-((2-aminoethyl) amino) ethanol (also called: N-(2-aminoethyl) ethanolamine) and N-β (aminoethyl) γ-aminopropyltriethoxysilane (also called: N-2-(aminoethyl)-3-aminopropyltriethoxysilane) are used.

As the amino group-containing component, further preferably amino alcohol is singly used or used in combination with the amino group-containing alkoxysilyl compound. Particularly preferably, amino alcohol is used in combination with the amino group-containing alkoxysilyl compound. In the combination, in light of the gas barrier properties, relative to 100 parts by mass of a total amount of the amino alcohol and the amino group-containing alkoxysilyl compound, for example, 50 parts by mass or more, preferably 60 parts by mass or more, more preferably 70 parts by mass or more, and for example, 95 parts by mass or less, preferably 90 parts by mass or less, more preferably 85 parts by mass or less of the amino alcohol is combined. Meanwhile, the amino group-containing alkoxysilyl compound is, for example, 5 parts by mass or more, preferably 10 parts by mass or more, more preferably 15 parts by mass or more, and for example, 50 parts by mass or less, preferably 40 parts by mass or less, more preferably 30 parts by mass or less.

The amino group-containing component is preferably used as a chain extender in a prepolymer method described below.

When the active hydrogen group-containing component contains the polyol component and the amino group-containing component in combination, the content of the polyol component is, relative to 100 parts by mass of a total amount of the active hydrogen group-containing component, for example, 40 parts by mass or more, preferably 50 parts by mass or more, and for example, 95 parts by mass or less, preferably 85 parts by mass or less. Meanwhile, the content of the amino group-containing component is, for example, 5 parts by mass or more, preferably 15 parts by mass or more, and for example, 60 parts by mass or less, preferably 50 parts by mass or less.

For the reaction of the polyisocyanate component with the active hydrogen group-containing component, a known method such as a one-shot method or a prepolymer method is used. Preferably a prepolymer method is used.

In the one-shot method, for example, each of the above-described components is formulated (mixed) so that the equivalent ratio (NCO/active hydrogen group) of the isocyanate group in the polyisocyanate component relative to the active hydrogen group (hydroxyl group and amino group) in the active hydrogen group-containing component is, for example, 0.8 or more, preferably 0.9 or more, and for example, 1.2 or less, preferably 1.1 or less. Then, in a known polymerization method such as bulk polymerization (described below) or solution polymerization (described below), the mixture is subjected to a cure reaction at, for example, room temperature to 250°C, preferably room temperature to 200°C and for, for example, 5 minutes to 72 hours, preferably 4 to 24 hours.

In the prepolymer method, first, at least the polyisocyanate component containing the carbocyclic ring-directly-bonding NCO compound is allowed to react with a part of the active hydrogen group-containing component (the active hydrogen group-containing component other than the chain extender (the polyol component)), preferably, with the diol having 2 to 4 carbon atoms and the active hydrogen group-containing compound containing a hydrophilic group to synthesize an isocyanate group-terminated prepolymer.

In the reaction, relative to a total amount of the active hydrogen group in the part of the active hydrogen group-containing component, preferably, a total amount of the active hydrogen group (the hydroxyl group) of the polyol component, the equivalent ratio (isocyanate group/active hydrogen group) of the isocyanate group in the polyisocyanate component is, for example, 1.2 or more, preferably 1.3 or more, and for example, 3.0 or less, preferably 2.5 or less. Then, in this method, each of the above-described components is reacted in a known polymerization method such as bulk polymerization or solution polymerization, preferably, in solution polymerization having easy adjustment of the reactivity and viscosity.

In bulk polymerization, for example, the above-described components are blended under a nitrogen atmosphere, and allowed to react at a reaction temperature of 75 to 85°C for about 1 to 20 hours.

In solution polymerization, for example, the above-described components are blended in an organic solvent (solvent) under a nitrogen atmosphere, and allowed to react at a reaction temperature of 20 to 80°C for about 1 to 20 hours.

Examples of the organic solvent include those which are inactive to isocyanate groups and are highly hydrophilic, for example, acetone, methyl ethyl ketone, ethyl acetate, tetrahydrofuran, acetonitrile, and N-methylpyrrolidone.

In the above-described polymerization, as necessary, for example, an amine-based, tin-based, or lead-based reaction catalysts can be added, and unreacted polyisocyanate (including the carbocyclic ring-directly-bonding NCO compound) can be removed from the produced isocyanate group-terminated prepolymer, by a known method such as distillation and extraction.

When, for example, an ionic group is contained in the above-described polymerization, preferably, a neutralizing agent is added to neutralize to form a salt of the ionic group.

When the ionic group is an anionic group, examples of the neutralizing agent include a common use base, for example, organic bases (e.g., tertiary amines (trialkylamine having 1 to 4 carbon atoms such as trimethylamine and triethylamine, alkanolamines such as dimethylethanolamine, methyldiethanolamine, triethanolamine, and triisopropanolamine, and heterocyclic amines such as morpholine, etc.)), inorganic bases (ammonia, alkali metal hydroxide (lithium hydroxide, sodium hydroxide, potassium hydroxide, etc.), alkaline earth metal hydroxides (magnesium hydroxide, calcium hydroxide, etc.), and alkali metal carbonates (sodium carbonate, potassium carbonate, etc.)). These bases can be used alone or in combination of two or more.

The neutralizing agent is added, per 1 equivalent of the anionic group, 0.4 equivalent or more, preferably 0.6 equivalent or more, and for example, 1.2 equivalent or less, preferably 1 equivalent or less.

The isocyanate group-terminated prepolymer produced in the manner is a polyurethane prepolymer having at least one or preferably two or more free isocyanate groups at its molecular terminal, and the isocyanate group content (isocyanate group content based on the solid content excluding the solvent) is, for example, 0.3 mass% or more, preferably 0.5 mass% or more, more preferably 1.0 mass% or more, and for example, 15 mass% or less, preferably 12 mass% or less, more preferably 10 mass% or less.

The isocyanate group has an average functionality of, for example, 1.5 or more, preferably 1.9 or more, more preferably 2.0 or more, further preferably 2.1 or more, and for example, 3.0 or less, preferably 2.5 or less.

When the isocyanate group has an average functionality in the above-described range, a stable dispersion of the above-described polyurethane can be produced, and substrate adherence and gas barrier properties can be secured.

The number average molecular weight (number average molecular weight determined by GPC measurement using standard polystyrene as the calibration curve) is, for example, 500 or more, preferably 800 or more, and for example, 10000 or less, preferably 5000 or less.

Thereafter, in this method, the isocyanate group-terminated prepolymer produced in the above-described manner is allowed to react with the rest of the active hydrogen group-containing component, namely, the chain extender, preferably, with the amino group-containing component, for example, in water to produce the polyurethane dispersion of polyurethane resin.

To allow the isocyanate group-terminated prepolymer to react with the chain extender in water, for example, first, the isocyanate group-terminated prepolymer is added to water to disperse the isocyanate group-terminated prepolymer in water, and then the chain extender is added thereto, thereby extending the chains of the isocyanate group-terminated prepolymer with the chain extender.

To disperse the isocyanate group-terminated prepolymer in water, the isocyanate group-terminated prepolymer is added to water under stirring at a ratio of 100 to 1000 parts by mass of water relative to 100 parts by mass of the isocyanate group-terminated prepolymer.

Thereafter, the chain extender is dropped in the water in which the isocyanate group-terminated prepolymer is dispersed while stirring so that the equivalent ratio (active hydrogen group/isocyanate group) of the active hydrogen group of the chain extender (amino group and hydroxyl group) relative to the isocyanate group of the isocyanate group-terminated prepolymer is, for example, 0.6 to 1.2.

The chain extender is allowed to react by dropping, and after the dropping, the reaction is completed while further mixing, for example, at normal temperature. The reaction time until the completion of reaction is, for example, 0.1 hour or more, and for example, 10 hours or less.

In contrast to the above-described method, water can be added in the isocyanate group-terminated prepolymer to disperse the isocyanate group-terminated prepolymer in water, and then a chain extender is added to the dispersion to extend the chains of the isocyanate group-terminated prepolymer with the chain extender.

In this method, as necessary, the organic solvent and water can be removed, and furthermore, water can be added to adjust the solid content concentration.

The produced polyurethane dispersion of polyurethane resin has a solid content concentration of, for example, 10 mass% or more, preferably 15 mass% or more, more preferably 20 mass% or more, and for example, 60 mass% or less, preferably 50 mass% or less, more preferably 40 mass% or less.

The polyurethane resin in the polyurethane dispersion has a total of the urethane group concentration and the urea group concentration of, for example, 25 mass% or more, preferably 30 mass% or more, more preferably 33 mass% or more, and for example, 50 mass% or less, preferably 47 mass% or less, more preferably 45 mass% or less, further preferably 40 mass% or less.

The total of the urethane group concentration and the urea group concentration can be calculated from the charged ratio of material components.

Furthermore, for the gas barrier properties and the resistance properties to high-temperature sterilization treatment (retort treatment), the polyurethane dispersion preferably contains a cross-linking agent (curing agent).

Examples of the cross-linking agent include curable cross-linking agents such as epoxy curing agents, melamine curing agents, carbodiimide curing agents, aziridine curing agents, oxazoline curing agents, and isocyanate curing agents. Of these, examples of the isocyanate curing agents include, to be more specific, isocyanate curing agents having water dispersion properties (e.g., blocked isocyanate (e.g., tolylene diisocyanate blocked isocyanate, hexamethylenediisocyanate blocked isocyanate, xylylene diisocyanate blocked isocyanate, hydrogenated xylylene diisocyanate blocked isocyanate, etc.), and non-blocked polyisocyanate containing a hydrophilic group, etc.).

When the cross-linking agent is blended, the mixing ratio thereof relative to 100 parts by mass of the polyurethane resin is, based on the curing agent solid content, for example, 0.1 parts by mass or more, preferably 1 part by mass or more, and for example, 50 parts by mass or less, preferably 30 parts by mass or less.

Furthermore, as necessary, various additives can be blended in the polyurethane dispersion. Examples of the additive include silane coupling agents, alkoxysilane compounds, stabilizers (antioxidants, heat stabilizers, ultraviolet ray absorbents, etc.), plasticizers, antistatic agents, lubricants, anti-blocking agents, surfactants, dispersion stabilizers, coloring agents (pigments, dyes, etc.), fillers, colloidal silica, inorganic particles, inorganic oxide particles, and crystal nucleating agents.

The additives can be blended in advance in the above-described material components, and can be blended in the synthesized isocyanate group-terminated prepolymer or the polyurethane resin, and furthermore, can be blended when the components are blended simultaneously.

The mixing ratio of the additives is not particularly limited, and is set suitably in accordance with the purpose and application.

As necessary, a thermoplastic resin having gas barrier properties can be blended to an extent that does not damage the gas barrier properties.

Examples of the thermoplastic resin having gas barrier properties include polyvinyl alcohol, an ethylene-vinyl alcohol copolymer, a polyvinylidene chloride or vinylidene chloride copolymer, and polysaccharides such as starch and cellulose.

In the polyurethane dispersion, the active hydrogen group-containing component contains diol having 2 to 4 carbon atoms and an active hydrogen group-containing compound containing a hydrophilic group.

By using the polyurethane dispersion produced with the active hydrogen group-containing component, a polyurethane layer with excellent gas barrier properties is provided.

Furthermore, in the polyurethane dispersion of the present invention, the polyisocyanate component contains a polyisocyanate compound having a carbocyclic ring and an isocyanate group directly bonding to the carbocyclic ring at a ratio of 90 mass% or more relative to a total amount of the polyisocyanate component.

Such a direct bond of the isocyanate group to the carbocyclic ring in the polyisocyanate component of the polyurethane dispersion limits the degree of freedom of the isocyanate group and the degree of freedom of the urethane bond in the polyurethane resin.

As a result, the deformation and deterioration of the polyurethane layer due to the high-temperature sterilization treatment (retort treatment) is suppressed. Thus, when the polyurethane layer is laminated on the inorganic layer, the damage to the inorganic layer is suppressed.

Furthermore, in the laminate of the present invention, a dried product of the polyurethane dispersion is laminated on the inorganic layer. Therefore, the deformation and deterioration of the polyurethane layer due to the high-temperature sterilization treatment (retort treatment) is suppressed. Thus, the excellent gas barrier properties are achieved even after the high-temperature sterilization treatment (retort treatment).

Thus, the above-described polyurethane dispersion can be suitably used as a gas barrier layer in production of a polyurethane laminate including a polyurethane layer.

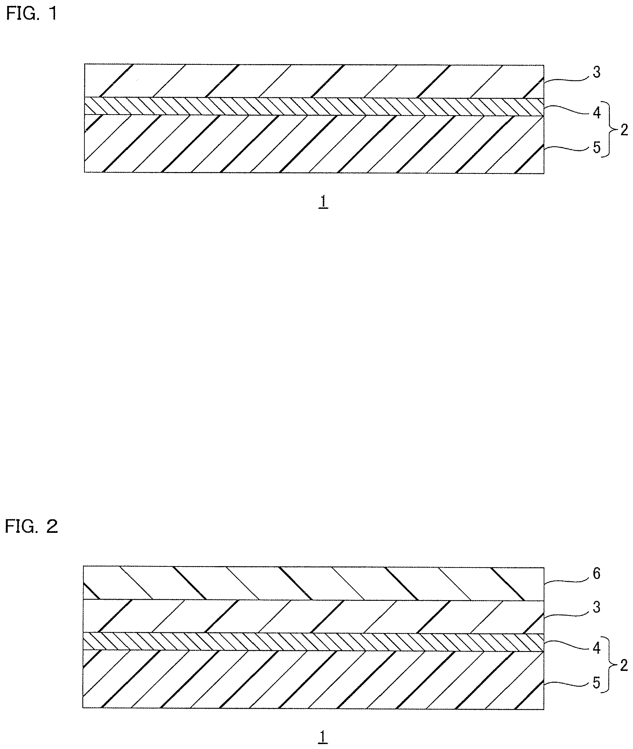

In FIG. 1, a laminate 1 includes a substrate 2 and a polyurethane layer 3 laminated on the substrate 2.

The substrate 2 includes the inorganic layer 4 as an essential layer.

More specifically, the substrate 2 includes only the inorganic layer 4 or includes the inorganic layer 4 and a resin layer 5 supporting the bottom surface of the inorganic layer 4.

Preferably, the substrate 2 includes the inorganic layer 4 and the resin layer 5 supporting the inorganic layer 4.

In other words, the substrate 2 includes the resin layer 5 and the inorganic layer 4 laminated on the resin layer 5.

The resin layer 5 is made, for example, of plastic (such as thermoplastic resin or thermosetting resin), and is preferably made of thermoplastic resin.

Examples of the thermoplastic resin include polyolefin resins (e.g., polyethylene, polypropylene, propylene-ethylene copolymer, etc.), polyester resins (e.g., polyethyleneterephthalate, polybutyleneterephthalate, polyethylenenaphthalate, etc.), polyamide resins (e.g., nylon 6 (registered trademark), nylon 66 (registered trademark), polymethaxylylene adipamide, etc.), vinyl resins (e.g., polyvinyl alcohol, ethylene-vinyl alcohol copolymer, polystyrene, polyvinyl acetate, etc.), acrylic resin (e.g., polymethylmethaacrylate, polyacrylonitrile, etc.), polycarbonate resins (e.g., bisphenol A polycarbonate, etc.), and cellulose resins (e.g., cellophane, acetic acid cellulose, etc.). Preferably, polyolefin resin, polyester resin, and polyamide resin are used. More preferably, polypropylene, polyethyleneterephthalate, and nylon 6 (registered trademark) are used.

The resin layer 5 is composed of a single layer or a laminate of the same or two or more types of layers.

The shape of the resin layer 5 is not particularly limited, and for example, the shape can be a film shape, a sheet shape, a bottle shape, and a cup shape. Preferably, the substrate 2 has a film shape.

The resin layer 5 can be any of a non-drawn substrate, and uniaxially or biaxially drawn substrate, and the resin layer 5 can be subjected to surface treatment (corona discharge treatment, etc.), or anchor coat or under coat treatment.

For the resin layer 5, preferably, a film made of thermoplastic resin, or more preferably, a polyethyleneterephthalate film is used.

The thickness of the resin layer 5 is not particularly limited, and is, for example, 5 µm or more, preferably 10 µm or more, and for example, 200 µm or less, preferably 100 µm or less.

The inorganic layer 4 is a layer made of an inorganic material. More specifically, the inorganic layer 4 is a thin film made of an inorganic material.

Examples of the inorganic material include: inorganic substances including metals such as magnesium, calcium, and barium in Group 2, titanium and zirconium in Group 4, aluminum and indium in Group 13, silicon, germanium, and tin in Group 14 of the periodic table (in compliance with IUPAC Periodic Table of the Elements (version date 22 June 007) and the same applies hereinafter); inorganic oxides including metal oxides such as magnesium oxide, titanium oxide, aluminum oxide, indium oxide, silicon oxide, and tin oxide; and inorganic nitride oxides such as silicon nitride oxide.

For the gas barrier properties and the production efficiency, preferably, aluminum, silicon, and their oxides are used. Alternatively, the combination of the metals and their oxides can form a layer made of metals and/or metal oxides.

For the gas barrier properties and production efficiency, further preferably, the inorganic layer 4 contains aluminum oxide and/or silicon oxide

The inorganic layer 4 is formed on a surface of the resin layer 5 by, for example, a vapor deposition method (vacuum vapor deposition method, or EB deposition method), a sputtering method, an ion plating method, a laminate method, or a Plasma-enhanced chemical vapor deposition method (CVD method).

For the production efficiency, preferably a vapor deposition method, or more preferably a vacuum vapor deposition method is used. In other words, the inorganic layer 4 is preferably an inorganic vapor deposition layer.

For example, in the vacuum vapor deposition method, preferably an electron beam heating method, a resistance heating method, and an induction heating method are used as the heating method of the vacuum vapor deposition apparatus.

The thickness of the inorganic layer 4 is appropriately selected according to the type or structure of the inorganic material. The thickness of the inorganic layer 4 is, for example, 1 nm or more, preferably 2 nm or more, and for example, 500 nm or less, preferably 300 nm or less.

The thickness of the substrate 2 (the total thickness of the resin layer 5 and inorganic layer 4) is, for example, 5 µm or more, preferably 10 µm or more, and for example, 200 µm or less, preferably 100 µm or less.

The polyurethane layer 3 is formed from the above-described polyurethane resin (aqueous polyurethane resin in the polyurethane dispersion). More specifically, the polyurethane layer 3 is a dried product of the above-described polyurethane dispersion.

For the production efficiency, the polyurethane layer 3 is formed by, preferably, applying the polyurethane dispersion containing the above-described polyurethane resin on a surface (opposite to a contact surface of the inorganic layer 4 to the resin layer 5) of the inorganic layer 4 and drying the applied dispersion.

More specifically, to form the polyurethane layer 3, the concentration of the polyurethane dispersion produced by the above-described method is adjusted to prepare a coating agent (coating solution). Then, the prepared coating agent is applied on the inorganic layer 4 and dried.

In the adjustment of the polyurethane dispersion concentration, for example, a known method such as addition or elimination of water or a known organic solvent can be used.

Alternatively, to give the inorganic layer 4 wettability or to dilute the coating agent, for example, mono-ol can be added to the coating agent.

Examples of the mono-ol include methanol, ethanol, propanol, isopropanol, butanol, 2-ethylhexyl alcohol, other alkanols (C5 to 38) and aliphatic unsaturated alcohol (C9 to 24), alkenyl alcohol, 2-propene-1-ol, alkadienol (C6 to 8), and 3,7-dimethyl-1,6-octadien-3-ol.

The mono-ols may be used singly or in combination of two or more.

For the mono-ol, preferably, 2-propanol is used.

The mixing ratio of the the mono-ol is, relative to 100 parts by mass of the coating agent of which concentration is adjusted as necessary, for example, 1 part by mass or more, preferably 2 parts by mass or more, and for example 50 parts by mass or less, preferably 35 parts by mass or less.

The solid content concentration of the coating agent is, for example, 0.5 mass% or more, preferably 1 mass% or more, and for example, 30 mass% or less, preferably 25 mass% or less.

The method for applying the coating agent is not particularly limited, and for example, known coating methods such as gravure coating method, reverse coating method, roll coating method, bar coating method, spray coating method, air knife coating method, and dipping method can be used.

The coating agent can be applied in-line at the time of production of the substrate 2.

To be specific, when the substrate 2 is a film shape, after uniaxially drawing in the vertical direction at the time of film forming, the coating agent is applied and dried by, for example, gravure coating method, and the film can be biaxially drawn to provide the polyurethane layer 3 on the inorganic layer 4.

When the substrate 2 has a bottle shape, the coating agent is applied on a preform before blow molding with, for example, dipping method, and dried, and then blow molding, thereby providing the polyurethane layer 3 on the inorganic layer 4.

The drying conditions are as follows: the drying temperature of, for example, 40°C or more, preferably 50°C or more, more preferably 90°C or more, and for example, 200°C or less, preferably 180°C or less, more preferably 150°C or less. The drying time is, for example, 0.1 minutes or more, preferably 0.2 minutes or more, and for example, 10 minutes or less, preferably 5 minutes or less.

In this manner, the polyurethane layer 3 made of the polyurethane resin (a dried product of the polyurethane dispersion) can be formed on the inorganic layer 4.

The thickness of the polyurethane layer 3 is, as a lamination amount of the polyurethane resin (after drying), for example, 0.05 g/m² or more, preferably 0.1 g/m² or more, more preferably 0.2 g/m² or more, and for example, 10 g/m² or less, preferably 7 g/m² or less, more preferably 5 g/m² or less, further preferably 3 g/m² or less, furthermore preferably 2 g/m² or less, particularly preferably 1 g/m² or less.

Then, as described above, the polyurethane layer 3 is formed on the inorganic layer 4 of the substrate 2. This provides the laminate 1 including the substrate 2 (the inorganic layer 4) and the polyurethane layer 3.

The thickness of the laminate 1 is, for example, 5 µm or more, preferably 10 µm or more, and for example, 1 mm or less, preferably 0.5 mm or less.

As necessary, the produced laminate 1 can be aged, for example, at 30 to 60°C for about 2 to 5 days.

The laminate 1 includes the above-described polyurethane layer 3 and the inorganic layer 4 in contact with a surface of the polyurethane layer 3.

That is, in the laminate 1, a dried product of the above-described polyurethane dispersion is laminated on the inorganic layer 4. The deformation and deterioration of the polyurethane layer 3 due to the high-temperature sterilization treatment (retort treatment) is suppressed. Thus, the excellent gas barrier properties are achieved even after the high-temperature sterilization treatment (retort treatment).

In the laminate 1, to improve the gas barrier properties, a layered inorganic compound can be dispersed in the polyurethane layer 3.

To be specific, for example, the mixture of the above-described polyurethane dispersion and the layered inorganic compound is applied on the inorganic layer 4 of the substrate 2 and dried, thereby forming a polyurethane layer 3 in which the layered inorganic compound is dispersed.

Examples of the layered inorganic compound include a swellable layered inorganic compound and a non-swellable layered inorganic compound. In view of gas barrier properties, preferably, a swellable layered inorganic compound is used.

The swellable layered inorganic compound is composed of extremely thin crystal units, and is a clay mineral having characteristics of coordinating or absorbing and swelling the solvent between its crystal unit layers.

Examples of the swellable layered inorganic compound include, to be specific, for example, water-containing silicate (phyllosilicate mineral, etc.), for example, kaolinite clay minerals (halloysite, kaolinite, endellite, Dickite, nakhlite, etc.), antigorite clay minerals (antigorite, chrysotile, etc.), smectite clay minerals (montmorillonite, beidellite, nontronite, saponite, hectorite, sauconite, stevensite, etc.), vermiculite clay minerals (vermiculite, etc.), mica clay minerals (micas such as muscovite and phlogopite, margarite, tetrasilylic mica, Taeniolite, etc.), and synthetic mica.

These swellable layered inorganic compounds may be a natural clay mineral or may be a synthetic clay mineral. These swellable layered inorganic compounds can be used singly, or can be used in combination of two or more, and preferably, smectite clay minerals (montmorillonite, etc.), mica clay minerals (water swellable mica, etc.), synthetic mica, and more preferably, synthetic mica is used.

The layered inorganic compound has an average particle size of, for example, 50 nm or more, preferably 100 nm or more, and usually 100 µm or less, for example, 75 µm or less, preferably 50 µm or less. The layered inorganic compound has an aspect ratio of, for example, 10 or more, preferably 20 or more, more preferably 100 or more, and for example, 5000 or less, preferably 4000 or less, more preferably 3000 or less.

To form a polyurethane layer 3 in which the layered inorganic compound is dispersed, for example, first, the above-described polyurethane dispersion and the layered inorganic compound are mixed to prepare a hybrid coating agent as their mixture. Then, the produced hybrid coating agent is applied on the inorganic layer 4 of the substrate 2 and dried.

To prepare the mixture (hybrid coating agent), first, the layered inorganic compound is dispersed in water, and then the polyurethane dispersion (including polyurethane resin) is added to the dispersion liquid.

The mixing ratio of the polyurethane resin and the layered inorganic compound is as follows: the layered inorganic compound relative to 100 parts by mass of a total mass of the polyurethane resin and the layered inorganic compound is 0.1 parts by mass or more, preferably 1 part by mass or more, and for example, 50 parts by mass or less, preferably 30 parts by mass or less.

When the mixing ratio of the polyurethane resin and the layered inorganic compound is in the above-described range, the gas barrier properties can be kept, and at the same time the adherence to the substrate, transparency, and low costs can be improved.

In the produced mixture (hybrid coating agent), a total concentration of the polyurethane resin and layered inorganic compound is, for example, 0.1 mass% or more, preferably 0.5 mass% or more, and for example, 15 mass% or less, preferably 12 mass% or less.

In the mixture (hybrid coating agent), the layered inorganic compound sometimes undergo secondary aggregation, and therefore preferably, the layered inorganic compound is dispersed or mixed in the solvent, and thereafter it is dispersed by using a mechanical and forceful dispersion treatment which involves shearing force, for example, by a homomixer, a colloid mill, a jet mill, a kneader, a bead mill, a sand mill, a ball mill, a three roll mill, and an ultrasonic dispersion device.

The hybrid coating agent can be applied without particular limitation, and the above-described known coating method can be used.

The drying conditions are, a drying temperature of, for example, 40°C or more, preferably 50°C or more and for example, 200°C or less, preferably 180°C or less. The drying time is, for example, 0.1 minutes or more, preferably 0.2 minutes or more, and for example, 10 minutes or less, preferably 5 minutes or less.

In this manner, the polyurethane layer 3 made of the polyurethane resin (the dried product of the polyurethane dispersion) and the layered inorganic compound can be formed on the inorganic layer 4 of the substrate 2.

The thickness of the polyurethane layer 3 is, as a lamination amount of the polyurethane resin and the layered inorganic compound (after drying), for example, 0.1 g/m² or more, preferably 0.2 g/m² or more, more preferably 0.6 g/m² or more, and for example, 10 g/m² or less, preferably 7 g/m² or less, more preferably 5 g/m² or less.

As described above, the polyurethane layer 3 is formed on the inorganic layer 4 of the substrate 2, thereby forming the laminate 1.

The thickness of the laminate 1 is, for example, 5 µm or more, preferably 10 µm or more, and for example, 1 mm or less, preferably 0.5 mm or less.

In the laminate 1, the mass ratio of the layered inorganic compound relative to 100 parts by mass of the total amount of the polyurethane layer 3 is, for example, 0.1 parts by mass or more, preferably 0.2 parts by mass or more, more preferably 1 part by mass or more, and for example, 90 parts by mass or less, preferably 70 parts by mass or less, more preferably 50 parts by mass or less.

When the layered inorganic compound has a mass ratio in the above-described range, the adherence to the substrate and the transparency can be improved, and the mixing ratio of the layered inorganic compound can be reduced, and therefore low costs can be achieved.

Furthermore, as necessary, the produced laminate 1 can be aged, for example, at 30 to 60°C for about 2 to for 5 days.

The laminate 1 includes the polyurethane layer 3 produced by using the above-described polyurethane dispersion, and the layered inorganic compound is dispersed in the polyurethane layer 3. Therefore, the laminate 1 has particularly excellent gas barrier properties.

Furthermore, the thus produced laminate 1 is excellent in, not only gas barrier properties, but also adherence to the inorganic layer 4. Furthermore, the gas barrier properties and adherence can be maintained after high-temperature sterilization treatment.

Therefore, the laminate 1 is preferably used in the field of the gas barrier properties film, to be specific, for a packing film for food or medical, a food packing container (including a bottle), an optical film, or an industrial film. Particularly, the laminate 1 is preferably used for a food packing film for contents that require heating treatment such as boil sterilization, retort sterilization, and cooking with heat.

By including a coloring agent such as pigment in the above-described coating agent or the hybrid coating agent to prepare the mixture as an ink for printing, and applying the mixture to a plastic film, paper, and container, they are suitably used also for a printing film or printing medium.

In the description, the inorganic layer 4 is in contact with only a surface of the polyurethane layer 3. In the laminate 1, however, the inorganic layer 4 can be in contact with at least a surface of the polyurethane layer 3. For example, the inorganic layer 4 can be in contact with both surfaces of the polyurethane layer 3.

Furthermore, in the laminate 1, as illustrated in FIG. 2, another polyurethane layer 6 can be laminated on the surface of the polyurethane layer 3.

Hereinafter, the above-described polyurethane layer 3 in contact with the inorganic layer 4 will be referred to as a "first polyurethane layer 3". Meanwhile, the above-described polyurethane dispersion and polyurethane resin used for forming the first polyurethane layer 3 will be referred to as a "first polyurethane dispersion" and "first polyurethane resin", respectively.

Further, hereinafter, the polyurethane layer 6 laminated on the first polyurethane layer 3 will be referred to as a "second polyurethane layer 6". Meanwhile, a polyurethane dispersion and polyurethane resin described below and used for forming the second polyurethane layer 6 will be referred to as a "second polyurethane dispersion" and "second polyurethane resin", respectively.

In FIG. 2, the laminate 1 includes the first polyurethane layer 3 including the first polyurethane resin, and the substrate 2 in which the inorganic layer 4 is in contact with a surface of the first polyurethane layer 3. Further, in the laminate 1, the second polyurethane layer 6 is laminated on the other surface of the first polyurethane layer 3 opposite to the surface in contact with the inorganic layer 4.

The second polyurethane layer 6 is a dried product of the second polyurethane dispersion containing the second polyurethane resin.

The second polyurethane resin is a reaction product of a reaction of at least the second polyisocyanate component with the second active hydrogen group-containing component.

The second polyisocyanate component contains a second polyisocyanate compound as a main component (for example, at a ratio, relative to a total amount of the second polyisocyanate component, of 90 mass% or more, preferably 95 mass% or more).

Preferably, the second polyisocyanate component consists of the second polyisocyanate compound.

The second polyisocyanate compound contains, for example, xylylene diisocyanate and/or hydrogenated xylylene diisocyanate.

Examples of xylylene diisocyanate (XDI) include structural isomers of 1,2-xylylene diisocyanate (o-XDI), 1,3-xylylene diisocyanate (m-XDI), and 1,4-xylylene diisocyanate (p-XDI).

These xylylene diisocyanates may be used singly or in combination of two or more. For the xylylene diisocyanate, preferably 1,3-xylylene diisocyanate and 1,4-xylylene diisocyanate are used. More preferably, 1,3-xylylene diisocyanate is used.

Examples of the hydrogenated xylylene diisocyanate (also called: bis(isocyanatomethyl) cyclohexane) (H₆XDI) include structural isomers of 1,2-hydrogenated xylylene diisocyanate (1,2-bis(isocyanatomethyl) cyclohexane, o-H₆XDI), 1,3-hydrogenated xylylene diisocyanate (1,3-bis(isocyanatomethyl) cyclohexane, m-H₆XDI), and 1,4-hydrogenated xylylene diisocyanate (1,4-bis(isocyanatomethyl) cyclohexane, p-H₆XDI).

These hydrogenated xylylene diisocyanates may be used singly or in combination of two or more. For the hydrogenated xylylene diisocyanate, preferably 1,3-hydrogenated xylylene diisocyanate and 1,4-hydrogenated xylylene diisocyanate are used. More preferably, 1,3-hydrogenated xylylene diisocyanate is used.

Examples of xylylene diisocyanate and/or hydrogenated xylylene diisocyanate include their derivatives.

Examples of the derivatives include multimers, allophanate-modified products, polyol modified products, biuret-modified products, urea-modified products, oxadiazinetrione-modified products, carbodiimide-modified products, urethodione-modified products, and uretonimine-modified products of xylylene diisocyanate and/or hydrogenated xylylene diisocyanate.

The derivative may be used singly or in combination of two or more.

In the second polyisocyanate compound, preferably, xylylene diisocyanate is used.

The second polyisocyanate component may contain, as necessary, other polyisocyanates.

Examples of the other polyisocyanates include polyisocyanates such as aromatic polyisocyanates, araliphatic polyisocyanates (excluding xylylene diisocyanate), aliphatic polyisocyanates, and alicyclic polyisocyanates (excluding hydrogenated xylylene diisocyanate).

Examples of the aromatic polyisocyanate include aromatic diisocyanates such as tolylene diisocyanate (2,4- or 2,6-tolylene diisocyanate or a mixture thereof)(TDI), phenylenediisocyanate (m-, p-phenylenediisocyanate or a mixture thereof), 4,4'-diphenyl diisocyanate, 1,5-naphthalene diisocyanate (NDI), diphenylmethanediisocyanate (4,4'-, 2,4'- or 2,2'-diphenylmethanediisocyanate or a mixture thereof)(MDI), 4,4'-toluidine diisocyanate (TODI), and 4,4'-diphenylether diisocyanate.

Examples of the araliphatic polyisocyanate (excluding xylylene diisocyanate) include araliphatic diisocyanates such as tetramethylxylylene diisocyanate (1,3- or 1,4-tetramethylxylylene diisocyanate or a mixture thereof)(TMXDI), and ω,ω'-diisocyanate-1,4-diethylbenzene.

Examples of the aliphatic polyisocyanate include aliphatic diisocyanates such as trimethylenediisocyanate, 1,2-propylenediisocyanate, butylenediisocyanate (tetramethylenediisocyanate, 1,2-butylenediisocyanate, 2,3-butylenediisocyanate, and 1,3-butylenediisocyanate), 1,5-pentamethylenediisocyanate (PDI), 1,6-hexamethylenediisocyanate (also called: hexamethylenediisocyanate)(HDI), 2,4,4- or 2,2,4-trimethylhexamethylenediisocyanate, and 2,6-diisocyanatemethyl caproate.

Examples of the alicyclic polyisocyanate (excluding hydrogenated xylylene diisocyanate) include alicyclic diisocyanates such as 1,3-cyclopentane diisocyanate, 1,3-cyclopentene diisocyanate, cyclohexanediisocyanate (1,4-cyclohexanediisocyanate, 1,3-cyclohexanediisocyanate), 3-isocyanatomethyl-3,5,5-trimethylcyclohexyl isocyanate (also called: isophoron diisocyanate)(IPDI), methylenebis(cyclohexyl isocyanate)(also called: bis(isocyanatocyclohexyl) methane)(4,4'-, 2,4'- or 2,2'-methylenebis(cyclohexyl isocyanate), their Trans,Trans-isomer, Trans,Cis-isomer, Cis,Cis-isomer, or a mixture thereof)(H₁₂MDI), methylcyclohexanediisocyanate (methyl-2,4-cyclohexanediisocyanate, methyl-2,6-cyclohexanediisocyanate), and norbornanediisocyanate (various isomers or a mixture thereof)(NBDI). Preferably, 4,4'-methylenebis(cyclohexyl isocyanate) is used.

Examples of the other polyisocyanate include the above-described derivatives.

These other polyisocyanates may be used singly or in combination of two or more. Preferably, araliphatic polyisocyanate and alicyclic polyisocyanate are used. More preferably, alicyclic polyisocyanate is used. Furthermore preferably, bis(isocyanatocyclohexyl) methane is used.

When the other polyisocyanates (excluding xylylene diisocyanate and hydrogenated xylylene diisocyanate) are to be blended, the mixing ratio of the xylylene diisocyanate and hydrogenated xylylene diisocyanate (when they are used in combination, their total) is, for example, 50 mass% or more, preferably 60 mass% or more, more preferably 80 mass% or more, and for example, 99 mass% or less, relative to a total amount of the second polyisocyanate component.

For the second polyisocyanate component, further preferably, xylylene diisocyanate and bis(isocyanatocyclohexyl) methane are used in combination.

Xylylene diisocyanate and bis(isocyanatocyclohexyl) methane are used in combination, thereby producing the polyurethane dispersion with excellent water dispersion properties and a small average particle size without damaging the gas barrier properties.

When xylylene diisocyanate and bis(isocyanatocyclohexyl) methane are used in combination, for example, 60 parts by mass or more, preferably 70 parts by mass or more, more preferably 80 parts by mass or more, and for example, 95 parts by mass or less, preferably 93 parts by mass or less, more preferably 90 parts by mass or less of xylylene diisocyanate is combined relative to 100 parts by mass of a total amount of xylylene diisocyanate and bis(isocyanatocyclohexyl) methane (preferably, the second polyisocyanate component). Meanwhile, for example, 5 parts by mass or more, preferably 7 parts by mass or more, more preferably 10 parts by mass or more, and for example, 40 parts by mass or less, preferably 30 parts by mass or less, more preferably 20 parts by mass or less of bis(isocyanatocyclohexyl) methane is combined.

For the second active hydrogen group-containing component, preferably, the same polyol component as the above and the same amino group-containing compound as the above are used.

That is, the second active hydrogen group-containing component preferably contains the same second polyol component as the above-described polyol component. More specifically, the second active hydrogen group-containing component contains diol having 2 to 4 carbon atoms and the above-described active hydrogen group-containing compound containing a hydrophilic group.

For the diol having 2 to 4 carbon atoms, preferably, alkanediol having 2 to 4 carbon atoms is used. More preferably, ethylene glycol is used.

The mixing ratio of the diol having 2 to 4 carbon atoms is, relative to 100 parts by mass of a total amount of the second polyol component, for example, 20 parts by mass or more, preferably 30 parts by mass or more, more preferably 50 parts by mass or more, and for example, 80 parts by mass or less, preferably 70 parts by mass or less.

For the active hydrogen group-containing compound containing the hydrophilic group, preferably, the active hydrogen group-containing compound containing an ionic group, more preferably carboxy group-containing polyol, or further preferably polyhydroxy alkanoic acid is used.

The mixing ratio of the active hydrogen group-containing compound containing the hydrophilic group is, relative to 100 parts by mass of a total of the second polyol component, for example, 20 parts by mass or more, preferably 25 parts by mass or more, more preferably 30 parts by mass or more, and for example, 50 parts by mass or less, preferably 45 parts by mass or less, more preferably 40 parts by mass or less.

Alternatively, the second polyol component can further contain other low-molecular-weight polyols (such as the above-described diol having 5 or more carbon atoms (dihydric alcohol), and the low-molecular-weight polyol having a functionality of three or more), and the above-described high-molecular-weight polyols.

Preferably, the second polyol component contains the other low-molecular-weight polyols.

For the other low-molecular-weight polyol, preferably, the low-molecular-weight polyol having a functionality of three or more is used.

When the other low-molecular-weight polyol is blended, the mixing ratio thereof is relative to 100 parts by mass of a total amount of the second polyol component, is 30 parts by mass or less, preferably 20 parts by mass or less, more preferably 10 parts by mass or less, and for example, 1 part by mass or more.

Alternatively, when low-molecular-weight polyol having a functionality of three or more is used as the other low-molecular-weight polyol, for example, 1 part by mass or more, preferably 5 parts by mass or more, and for example 20 parts by mass or less, preferably 10 parts by mass or less of the low-molecular-weight polyol having a functionality of three or more is combined relative to 100 parts by mass of a total amount of the diol having 2 to 4 carbon atoms and trihydric alcohol as the combination ratio of the diol having 2 to 4 carbon atoms and the low-molecular-weight polyol having a functionality of three or more.

Note that, for the gas barrier properties, preferably, the second active hydrogen group-containing component (the second polyol component) does not contain high-molecular-weight polyol.

The second polyol component more preferably consists of the above-described diol having 2 to 4 carbon atoms, the active hydrogen group-containing compound containing the hydrophilic group, and the low-molecular-weight polyol having a functionality of three or more.

When the second polyurethane layer 6 is laminated on the surface of the first polyurethane layer 3 as the laminate 1 (see FIG. 2), particularly preferably, the polyol component (the second polyol component) that is a material for producing the second polyurethane layer 6 contains the low-molecular-weight polyol having a functionality of three or more. On the other hand, preferably, the polyol component (a first polyol component) that is a material for producing the first polyurethane layer 3 does not contain the low-molecular-weight polyol having a functionality of three or more.

As described above, when the polyol component that is a material for producing the second polyurethane layer 6 contains the low-molecular-weight polyol having a functionality of three or more and the polyol component that is a material for producing the first polyurethane layer 3 does not contain the low-molecular-weight polyol having a functionality of three or more, the heat resistance improves.

Alternatively, the second active hydrogen group-containing component can further contain the above-described amino group-containing component as a second amino group-containing component in addition to the second polyol component.

For the second amino group-containing component, preferably, amino alcohol or the amino group-containing alkoxysilyl compound is used, and more preferably 2-((2-aminoethyl) amino) ethanol (also called: N-(2-aminoethyl) ethanolamine) and N-β (aminoethyl) γ-aminopropyltrimethoxysilane (also called: N-2-(aminoethyl)-3-aminopropyltrimethoxysilane) are used.

For the second amino group-containing component, further preferably, amino alcohol is singly used or amino alcohol and the amino group-containing alkoxysilyl compound are used in combination. Particularly preferably, amino alcohol and the amino group-containing alkoxysilyl compound are used in combination. When amino alcohol and the amino group-containing alkoxysilyl compound are used in combination, for the gas barrier properties, for example, 50 parts by mass or more, preferably 60 parts by mass or more, more preferably 66 parts by mass or more, and for example, 95 parts by mass or less, preferably 90 parts by mass or less, more preferably 85 parts by mass or less of amino alcohol is combined relative to 100 parts by mass of a total of the amino alcohol and amino group-containing alkoxysilyl compound. Meanwhile, for example 5 parts by mass or more, preferably 10 parts by mass or more, more preferably 15 parts by mass or more, and for example 50 parts by mass or less, preferably 40 parts by mass or less, more preferably 30 parts by mass or less of the amino group-containing alkoxysilyl compound is combined.

Note that, the second amino group-containing component is preferably used as the chain extender in a prepolymer method.

When the second active hydrogen group-containing component has the second polyol component and the second amino group-containing component in combination, the content of the second polyol component is, relative to 100 parts by mass of a total of the active hydrogen group-containing component, for example, 50 parts by mass or more, preferably 60 parts by mass or more, and for example, 80 parts by mass or less, preferably 70 parts by mass or less. Meanwhile, the content of the second amino group-containing component is, for example, 5 parts by mass or more, preferably 10 parts by mass or more, and for example, 40 parts by mass or less, preferably 30 parts by mass or less.

Then, for the reaction of the second polyisocyanate component with the second active hydrogen group-containing component, for example, a known method such as the above-described one-shot method or the above-described prepolymer method is used.

Preferably, the same method as the above-described prepolymer method is used to produce the second polyurethane dispersion including the second polyurethane resin.

More specifically, in the one-shot method, for example, each of the above-described components is formulated (mixed) so that the equivalent ratio (NCO/active hydrogen group) of the isocyanate group in the second polyisocyanate component relative to the active hydrogen group (hydroxyl group and amino group) in the second active hydrogen group-containing component is, for example, 0.8 or more, preferably 0.9 or more, and for example, 1.2 or less, preferably 1.1 or less. Then, in a known polymerization method such as the above-described bulk polymerization or the above-described solution polymerization, the mixture is subjected to cure reaction at, for example, room temperature to 250°C, preferably room temperature to 200°C and for, for example, 5 minutes to 72 hours, preferably 4 to 24 hours.

In the prepolymer method, first, at least the second polyisocyanate component and a part of the second active hydrogen group-containing component (the active hydrogen group-containing component other than the chain extender (the second polyol component)) are reacted, thereby synthesizing an isocyanate group-terminated prepolymer.

In the reaction, relative to a total amount of the active hydrogen group in the second active hydrogen group-containing component, preferably, a total amount of the active hydrogen group (the hydroxyl group) of the second polyol component, the equivalent ratio (isocyanate group/active hydrogen group) of the isocyanate group in the second polyisocyanate component is, for example, 1.2 or more, preferably 1.3 or more, and for example, 3.0 or less, preferably 2.5 or less. Then, in this method, each of the above-described components is reacted in a known polymerization method such as the above-described bulk polymerization or the above-described solution polymerization, preferably, in solution polymerization with easy adjustment of the reactivity and viscosity.

In the above-described polymerization, as necessary, for example, amine-based, tin-based, or lead-based reaction catalysts can be added, and unreacted polyisocyanate can be removed from the produced isocyanate group-terminated prepolymer, by a known method such as distillation and extraction.

When, for example, an ionic group is contained in the polymerization, preferably, a neutralizing agent is added to neutralize to form a salt of the ionic group.

Thereafter, in the method, the isocyanate group-terminated prepolymer produced as described above is allowed to react with the rest of the second active hydrogen group-containing component, namely, the chain extender, or preferably the amino group-containing component, for example, in water to produce the second polyurethane dispersion of the second polyurethane resin.

To allow the isocyanate group-terminated prepolymer to react with the chain extender in water, as described above, the chain extender is dropped in the water in which the isocyanate group-terminated prepolymer is dispersed while being stirred so that the equivalent ratio (active hydrogen group/isocyanate group) of the active hydrogen group of the chain extender (amino group and hydroxyl group) relative to the isocyanate group of the isocyanate group-terminated prepolymer is, for example, 0.6 to 1.2.

Water may be added to the isocyanate group-terminated prepolymer to disperse the isocyanate group-terminated prepolymer in the water, and then the chain extender may be added thereto, thereby extending the chains of the isocyanate group-terminated prepolymer with the chain extender.

In this method, as necessary, the organic solvent and water can be removed, and furthermore, water can be added to adjust the solid content concentration.

The solid content concentration of the second polyurethane dispersion of the produced second polyurethane resin is, for example, 10 mass% or more, preferably 15 mass% or more, more preferably 20 mass% or more, and for example, 60 mass% or less, preferably 50 mass% or less, more preferably 45 mass% or less.

Meanwhile, a total amount of the urethane group concentration and the urea group concentration of the second polyurethane resin in the second polyurethane dispersion is, for example, 25 mass% or more, preferably 30 mass% or more, more preferably 33 mass% or more, and for example, 50 mass% or less, preferably 47 mass% or less, more preferably 45 mass% or less.

Alternatively, as necessary, the above-described cross-linking agent (curing agent) can be blended into the second polyurethane dispersion

When the cross-linking agent is blended, the mixing ratio thereof relative to 100 parts by mass of the second polyurethane resin is, based on the cross-linking agent solid content, for example, 0.1 parts by mass or more, preferably 1 part by mass or more, and for example, 50 parts by mass or less, preferably 30 parts by mass or less.

Furthermore, as necessary, various additives can be blended into the second polyurethane dispersion. Examples of the additive include silane coupling agents, alkoxysilane compounds, stabilizers (antioxidants, heat stabilizers, ultraviolet ray absorbents, etc.), plasticizers, antistatic agents, lubricants, anti-blocking agents, surfactants, dispersion stabilizers, coloring agents (pigments, dyes, etc.), fillers, colloidal silica, inorganic particles, inorganic oxide particles, and crystal nucleating agents.

The additives can be blended in advance in the above-described material components, and can be blended in the synthesized isocyanate group-terminated prepolymer or the second polyurethane resin, and furthermore, can be blended when the components are blended simultaneously.

The mixing ratio of the additives is not particularly limited, and is set suitably in accordance with the purpose and application.

As necessary, a thermoplastic resin having gas barrier properties can be blended into the second polyurethane dispersion in a range in which the gas barrier properties are not damaged.

Examples of the thermoplastic resin having gas barrier properties include polyvinyl alcohol, an ethylene-vinyl alcohol copolymer, a polyvinylidene chloride or vinylidene chloride copolymer, and polysaccharides such as starch and cellulose.

The second polyurethane dispersion described above is applied to the surface of the first polyurethane layer 3 and dried, thereby forming the second polyurethane layer 6.

More specifically, to form the second polyurethane layer 6, the concentration of the second polyurethane dispersion is adjusted to prepare a second coating agent (coating solution) by the above-described method, and then the prepared second coating agent is applied on the first polyurethane layer 3 and dried.

Alternatively, to give the first polyurethane layer 3 wettability or to dilute the coating agent, for example, the above-described mono-ol can be added to the second coating agent at the above-described ratio.

Furthermore, the solid content concentration of the second coating agent is, for example, 0.5 mass% or more, preferably 1 mass% or more, and for example, 30 mass% or less, preferably 25 mass% or less.

The method for applying the second coating agent is not especially limited. The same method as the above-described methods is used.

The drying conditions are as follows: the drying temperature is, for example, 40°C or more, preferably 50°C or more, more preferably 80°C or more, and for example, 200°C or less, preferably 180°C or less, more preferably 150°C or less. The drying time is, for example, 0.1 minutes or more, preferably 0.2 minutes or more, and for example, 10 minutes or less, preferably 5 minutes or less.

In the manner, the second polyurethane layer 6 made of the second polyurethane resin is formed on the first polyurethane layer 3.

Alternatively, in the laminate 1, to improve the gas barrier properties, a layered inorganic compound can be dispersed in the second polyurethane layer 6.

The thickness of the second polyurethane layer 6 is, as a lamination amount of the second polyurethane resin (after drying), for example, 0.05 g/m² or more, preferably 0.1 g/m² or more, more preferably 0.2 g/m² or more, and for example, 10 g/m² or less, preferably 7 g/m² or less, more preferably 5 g/m² or less, further preferably 3 g/m² or less, furthermore preferably 2 g/m² or less, particularly preferably 1 g/m² or less.

Then, as described above, the polyurethane layer 3 is formed on the inorganic layer 4 of the substrate 2 and further the second polyurethane layer 6 is formed on the first polyurethane layer 3, thereby producing the laminate 1 in which the substrate 2 (the inorganic layer 4), the polyurethane layer 3, and the second polyurethane layer 6 are sequentially laminated.

The thickness of the laminate 1 is, for example, 5 µm or more, preferably 10 µm or more, and for example, 1 mm or less, preferably 0.5 mm or less.

As necessary, the produced laminate 1 can be aged, for example, at 30 to 60°C for about 2 to 5 days.

The laminate 1 produced in the manner includes the above-described polyurethane layer 3 and further includes the inorganic layer 4 in contact with a surface of the polyurethane layer 3.

That is, in the laminate 1 described above, the dried product of the above-described polyurethane dispersion is laminated on the inorganic layer 4. This can suppress the deformation and deterioration of the first polyurethane layer 3 due to high-temperature sterilization treatment (retort treatment). Thus, excellent gas barrier properties are maintained after the high-temperature sterilization treatment (retort treatment).

Further, in the above-described laminate 1, the second polyurethane layer 6 is also formed on the first polyurethane layer 3. This provides particularly excellent gas barrier properties.

In addition, the second polyurethane layer 6 ensures the gas barrier properties. Thus, the first polyurethane layer 3 can be formulated with a focus on the suppression of the deformation and deterioration of due to the high-temperature sterilization treatment (retort treatment).

As a result, both the gas barrier properties and the resistance properties to high-temperature sterilization treatment (retort treatment) can excellently be achieved.

In the description, the first polyurethane layer 3 (and the second polyurethane layer 6 as necessary) is laminated only on a surface of the substrate 2. However, for example, although not illustrated, the first polyurethane layer 3 (and the second polyurethane layer 6 as necessary) can be laminated on both surfaces of the substrate 2. Further, the first polyurethane layer 3 (and the second polyurethane layer 6 as necessary) can entirely or partially be laminated on either or both of the surfaces of the substrate 2.

Therefore, because of its excellent gas barrier properties and resistance properties to high-temperature sterilization treatment (retort treatment), the laminate 1 is formed as a laminate film, as necessary, together with the above-described thermoplastic resin film (for example, nonoriented polypropylene film), and is suitably used for various packing films requiring gas barrier properties and is specifically used for a packing film for food or medical, a food packing container (including a bottle), an optical film, or an industrial film. Particularly, the laminate 1 is suitably used for a food packing film for contents that require heating treatment such as boil sterilization, retort sterilization, and cooking with heat.

The thus produced laminate 1 is suitably used also for printing film or printing medium, by preparing it as an ink for printing by including a coloring agent such as pigment to the above-described coating agent and the hybrid coating agent, and applying it to a plastic film, paper, and various vessels.

### Examples

In the following, the present invention is described based on Examples and Comparative Examples, but the present invention is not limited to Examples below. "Parts" and "%" are based on mass unless otherwise specified in the following. The numeral values used in Examples below, such as mixing ratios (contents), property values, and parameters, can be changed to the upper limit values (defined with "or less" or "less than") or lower limit values (defined with "or more" or "more than") of the corresponding mixing ratios (contents), property values, and parameters used in "DESCRIPTION OF THE EMBODIMENTS".

### 1. Example of Single-layered Polyurethane Layer

### <Preparation of polyurethane dispersion (PUD-A)>

### Examples 1 to 3 and Comparative Examples 1 to 6 (PUD-A1 to PUD-A9)

Based on each of the formulations described in Table 1, the polyisocyanate component, the polyol component, and methyl ethyl ketone (MEK) as a solvent were mixed, and the mixture was reacted in a nitrogen atmosphere at 65 to 70°C until a predetermined NCO% (2 to 11% or less) was reached, thereby producing a reaction solution containing an isocyanate group-terminated prepolymer.

Then, the produced reaction solution was cooled to 40°C, and thereafter, neutralized with triethylamine (TEA).

Then, the reaction solution was dispersed in ion-exchange water with a homodisper, and an aqueous amine solution in which 2-((2-aminoethyl) amino) ethanol was dissolved in ion-exchange water was added as a chain extender thereto. Further, as necessary, N-2-(aminoethyl)-3-aminopropyltrimethoxysilane (trade name; KBM-603, manufactured by Shin-Etsu Chemical Co., Ltd.) was added as a chain extender.

Thereafter, reaction was carried out for 1 hour, the methyl ethyl ketone and ion-exchange water were distilled off with an evaporator, and ion-exchange water was used to adjust the solid content to 25 mass%, thereby producing each of polyurethane dispersions A1 to A9 (PUD-A1 to PUD-A9).

A total of the urethane group concentration and the urea group concentration based on preparation formulation is shown in Table 1.

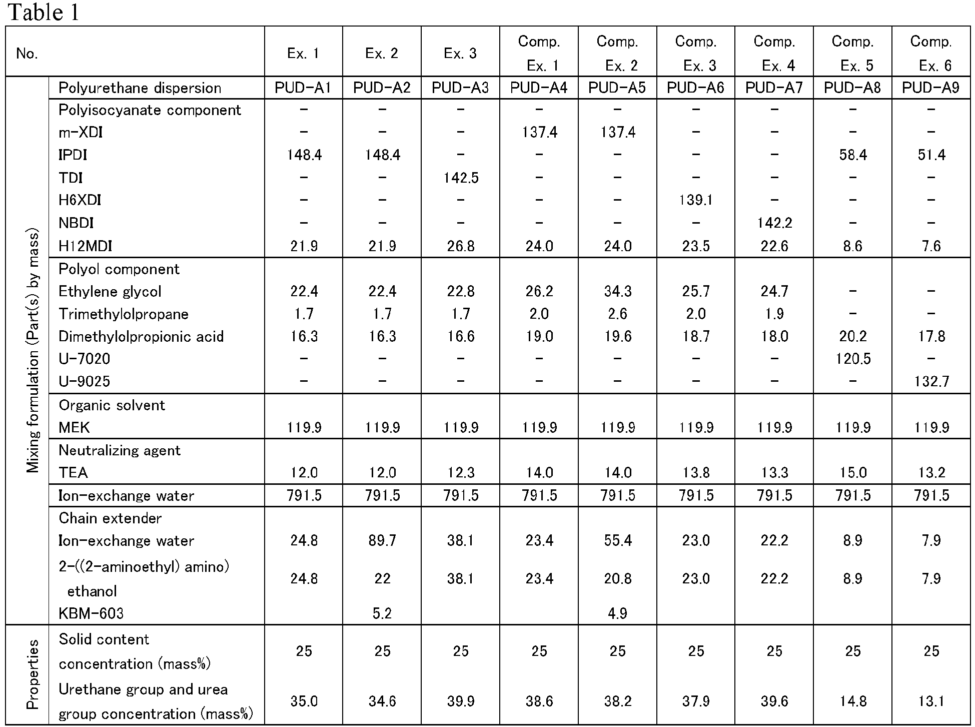

The details of the abbreviations in Table 1 are as follows.
m-XDI: TAKENATE 500, 1,3-xylylene diisocyanate, m-XDI, manufactured by Mitsui Chemicals Inc. (carbocyclic-ring-non-directly-bonding NCO compound)
IPDI: Vestanat IPDI, isophoron diisocyanate, IPDI, manufactured by Evonik Industries AG (carbocyclic ring-directly-bonding NCO compound)
TDI: COSMONATE T-80, 2,4-tolylene diisocyanate, TDI, manufactured by Mitsui Chemicals Inc. (carbocyclic ring-directly-bonding NCO compound)
H6XDI: TAKENATE 600, 1,3-bis(isocyanatomethyl) cyclohexane, 1,3-H₆XDI, manufactured by Mitsui Chemicals Inc. (carbocyclic-ring-non-directly-bonding NCO compound)
NBDI: bis(isocyanatomethyl) norbornane, NBDI, manufactured by Mitsui Chemicals Inc. (carbocyclic-ring-non-directly-bonding NCO compound)
H12MDI: Vestanat H₁₂MDI, 4,4'-methylenebis(cyclohexyl isocyanate, manufactured by Evonik Industries AG (carbocyclic ring-directly-bonding NCO compound)
EG: ethylene glycol
TMP: trimethylolpropane
DMPA: dimethylolpropionic acid
U-7020: Takelac U-7020, polyester polyol, number average molecular weight 2000, manufactured by Mitsui Chemicals Inc.
U-9025: Takelac U-9025, polyester polyol, number average molecular weight 2500, manufactured by Mitsui Chemicals Inc.
MEK: methyl ethyl ketone
TEA: triethylamine
AEA: 2-((2-aminoethyl) amino) ethanol
KBM-603: N-2-(aminoethyl)-3-aminopropyltrimethoxysilane (trade name; KBM-603, manufactured by Shin-Etsu Chemical Co., Ltd.

### <Preparation of coating agent>

### Preparation Examples 1 to 21 (Coating agent-Al to Coating agent-A21)

Based on each of the formulations described in Tables 2 and 3, each of the polyurethane dispersions (PUD) was mixed with a magnetic stirrer, and ion-exchange water, isopropanol and further, as necessary, a cross-linking agent were gradually added and stirred, thereby preparing Coating agent-Al to Coating agent-A21.

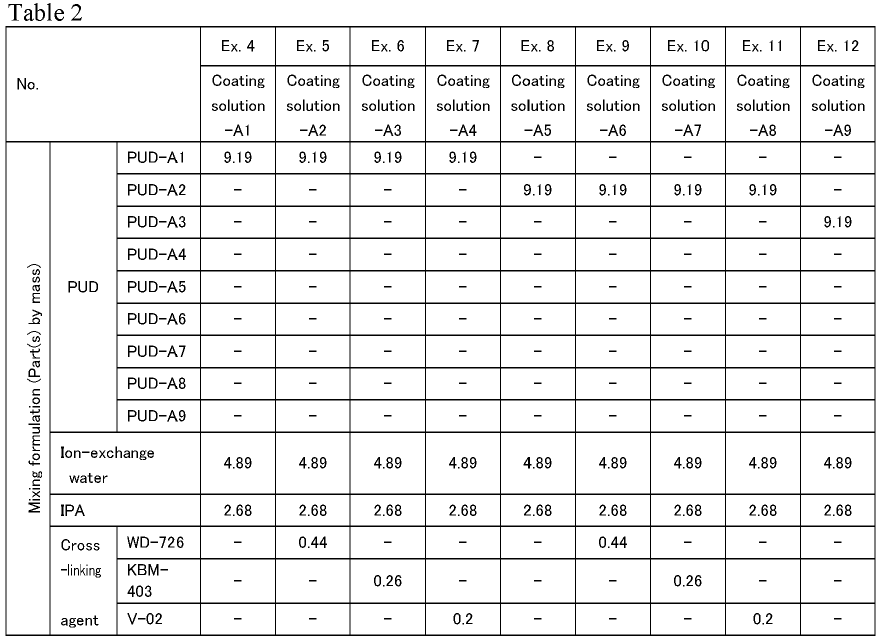

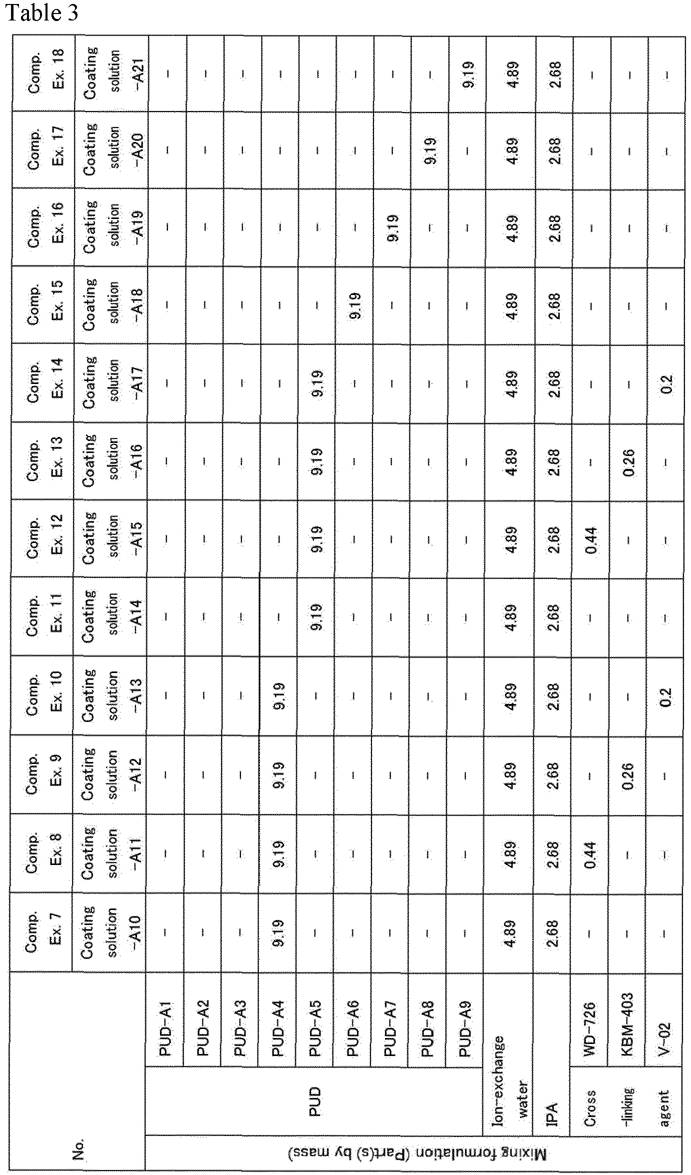

The details of the abbreviations in Tables are as follows.
IPA: isopropanol
TAKENATE WD-726: water dispersible polyisocyanate (cross-linking agent), solid content concentration of 80 mass%, manufactured by Mitsui Chemicals Inc.
KBM-403: 3-glycidoxypropyl trimethoxysilane (cross-linking agent), manufactured by Shin-Etsu Chemical Co., Ltd.
CARBODILITE V-02: a polycarbodiimide compound (cross-linking agent), manufactured by Nisshinbo Chemical Inc.

### <Preparation of laminate>

### Examples 4 to 12 and Comparative Examples 7 to 18

### Laminate-Al to Laminate-A21

Based on each of the formulations described in Tables 4 and 5, each of the coating agents produced in the preparation examples was applied to an alumina vapor deposition surface of an alumina vapor deposition PET film (Barrialox 1011HG (#12), manufactured by Toray advanced film Co., Ltd.) as a substrate using a bar coater so that the dried thickness was 0.5g/m², and put into a drying oven with a temperature setting of 110°C to dry for 1 minute, thereby forming a polyurethane layer on the alumina vapor deposition surface of the substrate. Thereafter, the formed laminate was aged at 50°C for 2 days.

The Laminate-Al to Laminate-A21 in which the polyurethane layer was laminated on the alumina vapor deposition surface were produced in this manner.

### « Evaluation»

### <Preparation of laminate film>

On the polyurethane layer of each of the laminates, the mixture (Takelac A-310/Takenate A-3 = 10/1 (mass ratio)) of Takelac A-310 (manufactured by Mitsui Chemicals Inc.) and Takenate A-3 (manufactured by Mitsui Chemicals Inc.) was applied as an adhesive for dry laminate using a bar coater so that the dried thickness was 3g/m² and was dried with a dryer.

Thereafter, a nonoriented polypropylene film (Tohcello CP RXC-22 (CPP film, #60), manufactured by Mitsui Chemicals Tohcello.Inc.) was laminated thereon through the above-described adhesive, and aging was carried out at 40°C for 3 days, thereby producing a laminate film.

### <Hot water sterilization (retort) test>

Each of the laminate films was subjected to hot water sterilization at 120°C under pressure of 0.2 MPa for 30 minutes. Thereafter, its appearance was visually evaluated to determine the presence or absence of whitening. The laminate film without whitening was evaluated as "Good".

### <Measurement of adherence (laminate strength)>

Before and after the retort test, the laminate strength between the substrate and the polyurethane layer of each of the laminate films was measured by T-peel test (15 mm width) in conformity with JIS K 6854. The alumina vapor deposition PET film that was torn in the measurement was evaluated as "MF".

### <Oxygen transmission (OTR) measurement>

Before and after the retort test, the oxygen transmission amount at 20°C under relative humidity of 80% (80%RH) per 1 m², 1 day, and 1 atmospheric pressure was measured for the laminate films using an oxygen transmission rate testing system (OX-TRAN2/20, manufactured by MOCON, Inc.).

Further, the OTR change rate before and after the retort test (OTR after the retort test/OTR before the retort test) was calculated.

**Table 4**

| No. | | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|
| Polyurethane layer | | PUD-A1 | PUD-A1 | PUD-A1 | PUD-A1 | PUD-A2 | PUD-A2 | PUD-A2 | PUD-A2 | PUD-A3 |
| | | Coating solution -A1 | Coating solution -A2 | Coating solution -A3 | Coating solution -A4 | Coating solution -A5 | Coating solution -A6 | Coating solution -A7 | Coating solution -A8 | Coating solution -A9 |
| Appearance after retort test | | Good | Good | Good | Good | Good | Good | Good | Good | Good |
| T-adhesive strength (mN/15mm) | Before retort test | 1.0 | MF | MF | MF | 0.5 | MF | MF | MF | MF |
| | After retort test | 1.8 | MF | 1.2 | MF | 1.5 | MF | 1.5 | MF | MF |
| OTR (cc, 20°C /80%) | Before retort test | 2.2 | 2.0 | 2.4 | 2.1 | 4.3 | 1.5 | 2.5 | 2.3 | 2.3 |
| | After retort test | 8.1 | 6.5 | 7.0 | 7.5 | 4.0 | 2.7 | 3.1 | 3.8 | 4.1 |
| OTR change rate(%) | | 3.7 | 3.3 | 2.9 | 3.6 | 0.9 | 1.8 | 1.2 | 1.7 | 1.8 |

**Table 5**

| No. | | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 | Comp. Ex. 15 | Comp. Ex. 16 | Comp. Ex. 17 | Comp. Ex. 18 |
|---|---|---|---|---|---|---|---|---|---|---|---|---|---|
| Polyurethane layer | | PUD-A4 | PUD-A4 | PUD-A4 | PUD-A4 | PUD-A5 | PUD-A5 | PUD-A5 | PUD-A5 | PUD-A6 | PUD-A7 | PUD-A8 | PUD-A9 |
| | | Coating solution -A10 | Coating solution -A11 | Coating solution -A12 | Coating solution -A13 | Coating solution -A14 | Coating solution -A15 | Coating solution -A16 | Coating solution -A17 | Coating solution -A18 | Coating solution -A19 | Coating solution -A20 | Coating solution -A21 |
| Appearance after retort test | | Whitened | Whitened | Good | Whitened | Good | Good | Good | Good | Good | Good | Good | Good |
| T-adhesive strength (mN/15mm) | Before retort test | MF | 2.1 | MF | 1.7 | MF | MF | MF | MF | MF | MF | MF | MF |
| | After retort test | 1.5 | 1.9 | MF | 1.8 | MF | 1.8 | MF | 1.7 | 1.2 | MF | MF | MF |
| OTR (cc, 20°C /80%) | Before retort test | 1.0 | 1.4 | 1.3 | 1.5 | 1.3 | 1.4 | 1.5 | 1.5 | 2.2 | 3.5 | 3.8 | 4.0 |
| | After retort test | 54.0 | 48.0 | 19.0 | 27.0 | 25.8 | 19.8 | 14.8 | 12.9 | 10.2 | 30.5 | 50.3 | 55.8 |
| OTR change rate(%) | | 54.0 | 34.3 | 14.6 | 18.0 | 19.8 | 14.1 | 9.9 | 8.6 | 4.7 | 8.7 | 13.2 | 14.0 |

### 2. Example of Two-layered Polyurethane Layer

### <Preparation of polyurethane dispersion (PUD)>

### Examples 13 to 15 and Comparative Examples 19 to 20 (PUD-B1 to PUD-B5)

Based on each of the formulations described in Table 6, the polyisocyanate component, the polyol component, and methyl ethyl ketone (MEK) or acetonitrile as a solvent were mixed, and the mixture was reacted in a nitrogen atmosphere at 65 to 70°C until a predetermined NCO% (6 to 11% or less) was reached, thereby producing a reaction solution containing an isocyanate group-terminated prepolymer.

Then, the produced reaction solution was cooled to 40°C, and thereafter, neutralized with triethylamine (TEA).

Then, the reaction solution was dispersed in ion-exchange water with a homodisper, and an aqueous amine solution in which 2-((2-aminoethyl) amino) ethanol was dissolved in ion-exchange water was added as a chain extender thereto. Further, as necessary, N-2-(aminoethyl)-3-aminopropyltrimethoxysilane (trade name; KBM-603, manufactured by Shin-Etsu Chemical Co., Ltd.) was added as a chain extender.

Thereafter, reaction was carried out for 1 hour, methyl ethyl ketone and ion-exchange water were distilled off with an evaporator, and ion-exchange water was used to adjust the solid content to 25 mass%, thereby producing each of polyurethane dispersions B1 to B5 (PUD-B1 to PUD-B5).

A total of the urethane group concentration and the urea group concentration based on preparation formulation is shown in Table 6.

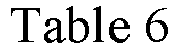

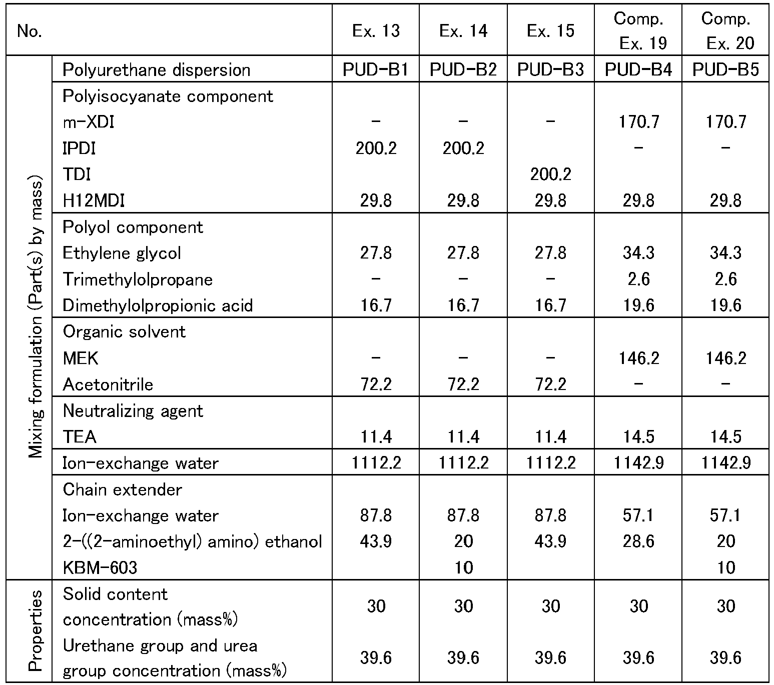

The abbreviations in Table 6 are the same as in Table 1.

### <Preparation of coating agent>

### Preparation Examples 22 to 35 (Coating agent-Bl to Coating agent-B14)

Based on each of the formulations described in Tables 7 and 8, each of the polyurethane dispersions (PUD) was mixed with a magnetic stirrer, and ion-exchange water, isopropanol and further, as necessary, a cross-linking agent were gradually added and stirred, thereby preparing Coating agent-Bl to Coating agent-B14.

**Table 7**

| No. | | Preparation Ex. 22 | Preparation Ex. 23 | Preparation Ex. 24 | Preparation Ex. 25 | Preparation Ex. 26 | Preparation Ex. 27 | Preparation Ex. 28 |
|---|---|---|---|---|---|---|---|---|
| | | Coating solution -B1 | Coating solution -B2 | Coating solution -B3 | Coating solution -B4 | Coating solution -B5 | Coating solution -B6 | Coating solution -B7 |
| PUD | PUD-B1 | 9.19 | 9.19 | 9.19 | - | - | - | - |
| | PUD-B2 | - | - | - | 9.19 | 9.19 | 9.19 | - |
| | PUD-B3 | - | - | - | - | - | - | 9.19 |
| | PUD-B4 | - | - | - | - | - | - | - |
| | PUD-B5 | - | - | - | - | - | - | - |
| Ion-exchange water | | 4.89 | 4.89 | 4.89 | 4.89 | 4.89 | 4.89 | 4.89 |
| IPA | | 2.68 | 2.68 | 2.68 | 2.68 | 2.68 | 2.68 | 2.68 |
| Cross -linking agent | Bhydul 3100 | - | 0.35 | - | - | 0.35 | - | - |
| | KBM-403 | - | - | 0.26 | - | - | 0.26 | - |

**Table 8**

| No. | | Preparation Ex. 29 | Preparation Ex. 30 | Preparation Ex. 31 | Preparation Ex. 32 | Preparation Ex. 33 | Preparation Ex. 34 | Preparation Ex. 35 |
|---|---|---|---|---|---|---|---|---|
| | | Coating solution -B8 | Coating solution -B9 | Coating solution -B10 | Coating solution -B11 | Coating solution -B12 | Coating solution -B13 | Coating solution -B14 |
| PUD | PUD-B1 | - | - | - | - | - | - | - |
| | PUD-B2 | - | - | - | - | - | - | 4.5 |
| | PUD-B3 | - | - | - | - | - | - | - |
| | PUD-B4 | 9.19 | 9.19 | 9.19 | - | - | - | |
| | PUD-B5 | - | - | - | 9.19 | 9.19 | 9.19 | 4.5 |
| Ion-exchange water | | 4.89 | 4.89 | 4.89 | 4.89 | 4.89 | 4.89 | 4.89 |
| IPA | | 2.68 | 2.68 | 2.68 | 2.68 | 2.68 | 2.68 | 2.68 |
| Cross -linking agent | Bhydul 3100 | - | 0.35 | - | - | 0.35 | - | - |
| | KBM-403 | - | - | 0.26 | - | - | 0.26 | - |

The abbreviations are the same as the above.

Bhydul 3100 in Tables is water dispersible polyisocyanate (cross-linking agent, Bayhydur 3100, manufactured by Bayer Material Science AG).

### <Preparation of laminate>

### Examples 16 to 23 and Comparative Examples 21 to 31

### Laminate-B 1 to Laminate-B 19

Based on each of the formulations described in Tables 9 and 10, each of the coating agents produced in the preparation examples was applied to an alumina vapor deposition surface of an alumina vapor deposition PET film (Barrialox 1011HG (#12), manufactured by Toray advanced film Co., Ltd.) as a substrate using a bar coater so that the dried thickness was 0.5g/m², and put into a drying oven with a temperature setting of 110°C to dry for 1 minute, thereby forming a first polyurethane layer on the alumina vapor deposition surface of the substrate. Thereafter, the formed laminate was aged at 50°C for 2 days.

Further, based on each of the formulations described in Tables 9 and 10, each of the coating agents produced in the preparation examples was applied to the surface of the first polyurethane layer using a bar coater so that the dried thickness was 0.5g/m², and put into a drying oven with a temperature setting of 110°C to dry for 1 minute, thereby forming a second polyurethane layer on the surface of the first polyurethane layer. Thereafter, the formed laminate was aged at 50°C for 2 days.

The Laminate-B 1 to Laminate-B 19 in which the first polyurethane layer was laminated on the alumina vapor deposition surface and the second polyurethane layer was laminated on the first polyurethane layer were produced in this manner.

### « Evaluation»

### <Preparation of laminate film>

On the polyurethane layer of each of the laminates, the mixture (Takelac A-310/Takenate A-3 = 10/1 (mass ratio)) of Takelac A-310 (manufactured by Mitsui Chemicals Inc.) and Takenate A-3 (manufactured by Mitsui Chemicals Inc.) was applied as an adhesive for dry laminate using a bar coater so that the dried thickness was 3g/m² and was dried with a dryer.

Thereafter, a nonoriented polypropylene film (Tohcello CP RXC-22 (CPP film, #60), manufactured by Mitsui Chemicals Tohcello.Inc.) was laminated thereon through the adhesive, and aged at 40°C for 3 days, thereby producing a laminate film.

### <Hot water sterilization (retort) test>

Each of the laminate film was subjected to hot water sterilization at 120°C under pressure of 0.2 MPa for 30 minutes.

### <Measurement of adherence (laminate strength)>

Before and after the retort test, the laminate strength between the substrate and the polyurethane layer of each of the laminate films was measured by T-peel test (15 mm width) in conformity with JIS K 6854. The alumina vapor deposition PET film that was torn in the measurement was evaluated as "MF".

### <Oxygen transmission (OTR) measurement>

Before and after the retort test, the oxygen transmission amount at 20°C under relative humidity of 80% (80%RH) per 1 m², 1 day, and 1 atmospheric pressure was measured for the laminate films using an oxygen transmission rate testing system (OX-TRAN2/20, manufactured by MOCON, Inc.).

Further, the OTR change rate before and after the retort test (OTR after the retort test/OTR before the retort test) was calculated.

**Table 9**

| No. | | Ex. 16 | Ex. 17 | Ex. 18 | Ex. 19 | Ex.20 | Ex.21 | Ex.22 | Ex. 23 |
|---|---|---|---|---|---|---|---|---|---|
| First polyurethane layer | | PUD-B1 | PUD-B1 | PUD-B1 | PUD-B2 | PUD-B2 | PUD-B2 | PUD-B3 | PUD-B2 |
| | | Coating solution -B1 | Coating solution -B2 | Coating solution -B3 | Coating solution -B4 | Coating solution -B5 | Coating solution -B6 | Coating solution -B7 | Coating solution -B5 |
| Second polyurethane layer | | PUD-B5 | PUD-B5 | PUD-B5 | PUD-B5 | PUD-B5 | PUD-B5 | PUD-B5 | PUD-B4 |
| | | Coating solution -B11 | Coating solution -B11 | Coating solution -B11 | Coating solution -B11 | Coating solution -B11 | Coating solution -B11 | Coating solution -B11 | Coating solution -B10 |
| T-adhesive strength (mN/15mm) | Before retort test | 2.2 | 2.5 | 2.5 | MF | MF | MF | MF | MF |
| | After retort test | 1.5 | 1.7 | 1.8 | 1.6 | 1.8 | 1.8 | 2.0 | 2.1 |
| OTR (cc, 20°C /80%) | Before retort test | 1.5 | 1.8 | 1.6 | 1.6 | 1.5 | 1.4 | 1.4 | 1.4 |
| | After retort test | 2.5 | 2.1 | 2.0 | 2.4 | 2.0 | 1.9 | 1.7 | 1.9 |
| OTR change rate(%) | | 1.7 | 1.2 | 1.3 | 1.5 | 1.3 | 1.4 | 1.2 | 1.4 |

**Table 10**

| No. | | Comp. Ex. 21 | Comp. Ex. 22 | Comp. Ex. 23 | Comp. Ex. 24 | Comp. Ex. 25 | Comp. Ex. 26 | Comp. Ex. 27 | Comp. Ex. 28 | Comp. Ex. 29 | Comp. Ex. 30 | Comp. Ex. 31 |
|---|---|---|---|---|---|---|---|---|---|---|---|---|
| First polyurethane layer | | PUD-B4 | PUD-B4 | PUD-B4 | PUD-B5 | PUD-B5 | PUD-B5 | PUD-B4 | PUD-B4 | PUD-B5 | PUD-B5 | PUD-B2 +PUD-B5 (1:1) |
| | | Coating solution -B8 | Coating solution -B9 | Coating solution -B10 | Coating solution -B11 | Coating solution -B12 | Coating solution -B13 | Coating solution -B9 | Coating solution -B10 | Coating solution -B11 | Coating solution -812 | Coating solution -B14 |
| Second polyurethane layer | | PUD-B5 | PUD-B5 | PUD-B5 | PUD-B5 | PUD-B5 | PUD-B5 | PUD-B2 | PUD-B2 | PUD-B2 | PUD-B2 | PUD-B3 |
| | | Coating solution -B11 | Coating solution -B11 | Coating solution -B11 | Coating solution -B11 | Coating solution -B11 | Coating solution -B11 | Coating solution -B5 | Coating solution -B5 | Coating solution -B5 | Coating solution -B5 | Coating solution -B6 |
| T-adhesive strength (mN/15mm) | Before retort test | MF | MF | MF | MF | MF | MF | MF | MF | MF | MF | MF |
| | After retort test | 1.5 | 1.7 | 1.8 | 1.5 | 1.7 | 1.8 | 1.8 | 1.8 | 1.8 | 1.8 | MF |
| OTR (cc, 20°C /80%) | Before retort test | 1.2 | 1.5 | 1.8 | 1.3 | 1.4 | 1.3 | 1.5 | 1.5 | 1.6 | 1.5 | 1.3 |
| | After retort test | 53.8 | 30.2 | 19.3 | 18.8 | 20.4 | 17.5 | 28.9 | 19.8 | 18.4 | 16.6 | 10.8 |
| OTR change rate(%) | | 44.8 | 20.1 | 10.7 | 14.5 | 14.6 | 13.5 | 19.3 | 13.2 | 11.5 | 11.1 | 8.3 |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The polyurethane dispersion and laminate of the present invention are suitably used, for example, for a packing film for food or medical, a food packing container (including a bottle), an optical film, or an industrial film.

### Description of reference numerals

- 1: Laminate
- 2: Substrate
- 3: Polyurethane layer

## Claims

1. A polyurethane dispersion in which polyurethane resin is dispersed in water, wherein the polyurethane resin is a reaction product of a reaction of at least a polyisocyanate component with an active hydrogen group-containing component,
the polyisocyanate component contains a polyisocyanate compound containing a carbocyclic ring and at least an isocyanate group directly bonding to the carbocyclic ring at a ratio of 90 mass% or more relative to a total amount of the polyisocyanate component, and
the active hydrogen group-containing component contains diol having 2 to 4 carbon atoms and an active hydrogen group-containing compound containing a hydrophilic group.

2. The polyurethane dispersion according to Claim 1, wherein
the polyisocyanate compound contains isophoron diisocyanate.

3. The polyurethane dispersion according to Claim 1 further containing a cross-linking agent.

4. A laminate comprising:
a first polyurethane layer including a dried product of the polyurethane dispersion according to Claim 1; and
an inorganic layer in contact with at least a surface of the first polyurethane layer.

5. The laminate according to Claim 4, wherein the inorganic layer contains aluminum oxide and/or silicon oxide.

6. The laminate according to Claim 4 further comprising:
a second polyurethane layer on the other surface of the first polyurethane layer opposite to the surface with which the inorganic layer is in contact, the second polyurethane layer including a dried product of a second polyurethane dispersion containing second polyurethane resin, wherein
the second polyurethane resin is a reaction product of a reaction of at least a second polyisocyanate component containing xylylene diisocyanate and/or hydrogenated xylylene diisocyanate with a second active hydrogen group-containing component containing diol having 2 to 4 carbon atoms and an active hydrogen group-containing compound containing a hydrophilic group.
